# EUROPÄISCHE PATENTSCHRIFT

(11) **EP 3 012 087 B1**
(45) Veröffentlichungstag und Bekanntmachung des Hinweises auf die Patenterteilung: **21.02.2018**
(21) Anmeldenummer: 15190605.4
(22) Anmeldetag: 20.10.2015
(51) Int. Cl.: B29C 49/42, B29C 49/06, B29C 49/18, B29C 49/46, B29C 49/60, B29K 67/00, B29K 105/00, B29L 31/00

(54) **HOHLKÖRPERHERSTELLUNGSMASCHINE**
MACHINE FOR MAKING HOLLOW ARTICLES
MACHINE DE FABRICATION DE CORPS CREUX

(30) Priorität: 20.10.2014 DE 102014015416
(43) Veröffentlichungstag der Anmeldung: 27.04.2016
(73) Patentinhaber: Krones AG, 93073 Neutraubling (DE)
(72) Erfinder: Handschuh, Eduard, 93073 Neutraubling (DE); Brinster, Paul, 93073 Neutraubling (DE); Höllriegl, Thomas, 93073 Neutraubling (DE); Brandl, Christoph, 93073 Neutraubling (DE)
(74) Vertreter: Bittner, Bernhard

(56) Entgegenhaltungen:
- DE-A1-102007 044 641
- DE-A1-102012 010 985
- DE-A1-102012 214 564
- DE-U1-202004 018 237
- US-B2- 7 674 108
- US-B2- 8 708 690

## Beschreibung

Die vorliegende Erfindung betrifft eine Hohlkörperherstellungsmaschine zur Herstellung von Hohlkörpern, insbesondere von Kunststoffbehältnissen, gemäß den Merkmalen der Oberbegriffe der unabhängigen Ansprüche.

### Stand der Technik

Hohlkörperherstellungsmaschinen sind aus dem Stand der Technik allgemein bekannt. Beispielsweise gibt es Blasmaschinen zur Herstellung von Kunststoffbehältnissen, z.B. PET-Flaschen, bei welchen eine Vielzahl von Blasstationen auf einem rundlaufenden Transportrad angeordnet sind und bei welchen erwärmte Vorformlinge kontinuierlich in die Blasstationen eingegeben werden, um diese - nach dem Schließen der Blasform und dem Abdichten der Vorformlinge - gegen die Innenwände der Blasform mittels Druckluft zu expandieren. Hierbei kann grundsätzlich nochmals unterschieden werden, ob es sich um einen sog. Einstufenprozess handelt, bei dem eine Blasmaschine derart mit einer Vorformlingsherstellungsmaschine (z.B. durch einen Spritzguss-, Compression-Molding- oder Extrusionsprozess) verbunden ist, sodass die Vorformlinge ohne eine weitere Abkühlung direkt nach ihrer Formgebung in einer Blasmaschine weiterverarbeitet werden können oder ob es sich um einen sog. Zweistufenprozess handelt, bei dem die Vorformlinge nach ihrem Herstellungsverfahren zunächst zwischengelagert werden und somit in kaltem Zustand vorliegen und in einem weiteren davon getrennten Prozessschritt zunächst vor dem eigentlichen Blasprozess durch eine Heizeinrichtung erwärmt werden. Ebenfalls sind stationäre Blasmaschinen zur Herstellung von Kunststoffbehältnissen aus dem Stand der Technik bekannt, welche meist im Taktbetrieb arbeiten.

Zur Bereitstellung von Druckluft befindet sich üblicherweise auf jeder Blasstation eine Ventileinheit, die die Zuleitung und auch (meistens) die Ableitung von Blasluft zu und aus den Hohlkörpern mittels Ventilen steuert.

Ebenfalls ist es bekannt, besagte Vorformlinge zunächst mit einem ersten Druck und zumindest zeitweise gleichzeitigem Recken mittels einer Reckstange vorzublasen und die Vorformlinge anschließend mit einem zweiten Druck, der größer ist als der erste Druck, fertigzublasen, wobei hierzu meistens zwei Druckluftspeicher, einer für den ersten und einer für den zweiten Druck, vorhanden sind und zwei den jeweiligen Druckluftspeichern zugeordnete Ventile einer Ventileinheit zum Freigeben der Leitung vom Druckluftspeicher in den zu formenden Vorformling angebracht sind. Üblicherweise ist auch ein zusätzliches Ventil zur Ableitung der Druckluft in einen Schalldämpfer vorgesehen.
Die drei Ventile sind üblicherweise in der Ventileinheit derart angeordnet, dass sie alle an einen gemeinsamen Hohlraum angrenzen, welcher mit dem Hohlkörper über eine relativ zum Hohlkörper bewegliche Blasdüse verbunden wird.
Eine derartige Vorrichtung ist beispielsweise in der Druckschrift DE 10 2012 010 985 (A1) offenbart.
Weiterhin ist es bekannt, den Volumenstrom eines Mediums in den aufzublasenden Hohlkörper mittels eines Proportionalventils zu steuern, um praktisch stufenlos den Volumenstrom einstellen zu können. Allerdings ist die Steuerung eines Proportionalventils sehr aufwändig.
Die Druckschriften DE 10 2012 010985 A1, US 8 708 690 B2, US 7,674,108 B2 und DE 20 2004 018237 U1 zeigen Hohlkörperherstellungsmaschinen. Aufgabe der Erfindung ist es, diesen Nachteil zu beseitigen und ein möglichst einfaches Ventil bereitzustellen, mit dem unterschiedliche Volumenströme des Mediums realisierbar sind.
Die obige Aufgabe wird durch eine Hohlkörperherstellungsmaschine und ein Verfahren gelöst, die die Merkmale der unabhängigen Patentansprüche umfassen. Weitere vorteilhafte Ausgestaltungen werden durch die Unteransprüche beschrieben.

### Beschreibung

Die Erfindung bezieht sich auf eine Hohlkörperherstellungsmaschine zur Herstellung von Hohlkörpern, insbesondere von Kunststoffbehältnissen, umfassend mindestens eine Form, innerhalb derer Hohlkörper, insbesondere Kunststoffbehältnisse, mittels Beaufschlagung durch ein unter Druck stehendes Medium herstellbar sind, eine mindestens zwei Ventile aufweisende Ventileinheit, wobei ein Eingang eines zweiten Ventils mit einem zweiten, unter einem zweiten Druck stehenden Druckspeicher verbunden ist und ein Ausgang des zweiten Ventils über einen Kanal mit einer Blasdüse verbunden ist, wobei der Eingang eines ersten Ventils mit einem ersten, unter einem ersten Druck stehenden Druckspeicher verbunden ist und der Ausgang des ersten Ventils über einen Kanal ebenfalls mit der Blasdüse verbunden ist, wobei die Blasdüse während eines zumindest eines Teils des Formungsvorgangs das zu formende Material und/oder die Form gegenüber der Umgebung abdichtet, wobei das erste Ventil ein Ventilgehäuse aufweist und innerhalb des Gehäuses zwischen dem Eingang und dem Ausgang ein Hohlraum ausgebildet ist, innerhalb dessen das Medium während des Formungsvorgangs durchleitbar ist und innerhalb dessen zumindest ein Teil eines Schaltelement angeordnet ist, mit welchem ein Öffnen und ein Schließen des ersten Ventils durchführbar ist.

Erfindungsgemäß sind zwischen dem Eingang und dem Ausgang des ersten Ventils mindestens zwei durch Material des Gehäuses und/oder des Schaltelements voneinander getrennte Strömungswege für das Medium bereitstellbar.

Durch die Bereitstellung zweier Strömungswege ist es möglich, mindestens zwei unterschiedliche Querschnitte für das Medium zu erzeugen, entweder a) durch Bereitstellung des Querschnitts eines einzigen Strömungswegs und die Bereitstellung beider Strömungswege oder b) durch Bereitstellung des Querschnitts eines einzigen Strömungswegs und die Bereitstellung des Querschnitts des anderen Strömungswegs, wobei sich die Querschnittsflächen der beiden Strömungswege unterscheiden. Bevorzugt können auch drei unterschiedliche Strömungsgesamtquerschnitte bereitgestellt werden, wenn man bei der Variante b) zusätzlich die gleichzeitige Bereitstellung beider Strömungswege vornimmt.

Die Querschnitte der Strömungswege können durch die Geometrie der Schalteinheit bzw. des Gehäuses fest vorgegeben und insbesondere nur durch Umbaumaßnahmen änderbar, sein. Mit anderen Worten sind die Querschnitte nicht stufenlos einstellbar, wie beispielsweise bei einem Proportionalventil. Stattdessen kommt eine Einstellung der Querschnitte auf Basis eines Stufenrasters in Frage.

Jeder der beiden Strömungswege ist, beispielsweise separat, durch die Schalteinheit absperrbar und auch wieder öffenbar. Eine Absperrung eines oder beider Strömungswege kann auch abhängig von den Strömungs- oder Druckverhältnissen im Eingang und/oder Ausgang des Ventils erfolgen.

Weiterhin kann durch die Bereitstellung der zwei, vorzugsweise fest, vorgegebenen Querschnitte der beiden Strömungswege der Antrieb des ersten Ventils sehr einfach gestaltet werden, da nur diskrete Stellungen, das heißt vorbestimmte Stellungen des Stufenraster, des Schaltelements realisiert werden müssen. Der Antrieb des Ventils ist vorzugsweise in Form eines pneumatischen oder hydraulischen Antriebs und beispielsweise über Vorsteuerventile realisiert.

Die beiden Strömungswege können sich ausschließlich innerhalb des Ventils bzw. des Ventilgehäuses befinden, sprich beide Strömungswege münden in diesem Fall in denselben Kanal, welcher an den Ausgang des Ventils angeschlossen ist. Unabhängig davon ob der erste oder zweite Strömungsweg genutzt wird, fließt das Medium in beiden Fällen durch denselben Eingang in das Ventil.

Das erste und zweite Ventil können, beispielsweise wie die Ventileinheit, nur einer Form zugeordnet sein, in welcher der Hohlkörper expandiert wird.

Bei den Druckspeichern kann es sich auch lediglich um Kanäle handeln, in welchen das unter Druck stehende Medium transportiert wird. Bei einem rotierenden Blasrad handelt es sich insbesondere um ringförmige Kanäle.

Der Druck im zweiten Druckspeicher kann beispielweise höher als der Druck im ersten Druckspeicher sein. Denkbar ist, dass der Druck im zweiten Druckspeicher für ein Fertigblasen der Hohlkörper verwendet und der Druck im ersten Druckspeicher für ein Vorblasen wird. Vorblasen ist dabei als ein Ausformen auf ca. 10 bis 98% des Volumens des fertigen Behälters zu sehen.

Zudem kann es sich bei den beiden Kanälen in der Ventileinheit zumindest bereichsweise um denselben Kanal handeln. Vorzugsweise handelt es sich jedoch auch um zumindest bereichsweise voneinander getrennte Kanäle, die in einen gemeinsamen Kanal münden, der seinerseits mit der Blasdüse verbunden ist.

Gemäß zumindest einer Ausführungsform der Hohlkörperherstellungsmaschine ist vorgesehen, dass in einem ersten Betriebszustand des ersten Ventils lediglich ein erster der beiden Strömungswege für das Medium bereitgestellt wird. Bei diesem Betriebszustand kann ein Vorblasen durchgeführt werden, bei welchem der Hohlkörper mittels Zuführung des Mediums lediglich teilweise expandiert wird. Hierbei strömt das Medium von dem Eingang des Ventils zum Ausgang des Ventils über den ersten Strömungsweg. Insbesondere wird hierbei der Strömungsweg mit kleinerem Querschnitt genutzt.

Gemäß zumindest einer Ausführungsform ist vorgesehen, dass in einem zweiten Betriebszustand des ersten Ventils lediglich ein zweiter der beiden Strömungswege für das Medium bereitgestellt wird. Bei diesem Betriebszustand wird beispielsweise ein Recyceln von dem Medium durchgeführt, bei welchem ein Teil des Mediums aus dem vorzugsweise fertig expandiertem Hohlkörper über das erste Ventil zurück in den Druckspeicher führbar ist bzw. geführt wird. Hierbei strömt das Medium von dem Ausgang des Ventils zum Eingang des Ventils über den zweiten Strömungsweg.

Das Medium stammt dabei ursprünglich vom zweiten Druckspeicher, über welchen es in den Hohlkörper über das zweite Ventil gelangt und steht deswegen im Hohlkörper unter einem höheren Druck als der Druck im ersten Druckspeicher. Deswegen kann in diesem Betriebszustand das Medium in anderer Richtung - nämlich von dem Ausgang des Ventils zu dessen Eingang - beim nochmaligen Öffnen des ersten Ventils strömen. Hierbei wird kann dann ein anderer Strömungsweg als bei dem Vorblasen genutzt werden.

Durch Stellung des Schaltelements kann der zweite Strömungsweg in bestimmten Ausführungsformen noch einen ihm zugeordneten zweiten definierten Querschnitt annehmen. Vorzugsweise ist dieser größer als der Querschnitt, der zuvor beschrieben ist. Dies ist ein fünfter Betriebszustand des Ventils.

Gemäß zumindest einer Ausführungsform ist vorgesehen, dass in einem dritten Betriebszustand des ersten Ventils beide Strömungswege gleichzeitig für das Medium bereitgestellt werden. Bei diesem Betriebszustand wird beispielsweise ein Sterilisieren der Mediumswege bzw. der beiden Strömungswege gleichzeitig durchgeführt, vorzugsweise vom Eingang des Ventils zum Ausgang des Ventils. Im dritten Betriebszustand kann allerdings auch das zuvor erwähnte Recyceln durchgeführt werden, wenn man einen möglichst großen Querschnitt zur Verfügung stellen will.

Bei einer Sterilisation des Ventils ist denkbar, dass statt des in einem Produktionsmodus der Maschine verwendeten Mediums ein anderes, die Kanäle und Ventile sterilisierendes Medium durchgeleitet wird. Dieser sogenannte Sterilisationsmodus wird in beispielsweise regelmäßigen Abständen und/oder nach einem Formatwechsel (z.B. Blasformwechsel) durchgeführt.

Bei dem Sterilisationsmedium handelt es sich beispielsweise um ein gasförmiges Medium, zum Beispiel um gasförmiges Wasserstoffperoxid. Dabei muss sichergestellt werden, dass dieses nicht innerhalb der Kanäle der Ventileinheit kondensiert, da es ansonsten nur noch schwer abzuführen (aus der Maschine heraus) ist. Da jedoch der erste Strömungsweg, der insbesondere zum Vorblasen verwendet wird (bzw. auch bei den Vorblasventilen im Stand der Technik), einen zu kleinen Strömungsquerschnitt aufweisen kann, so dass das gasförmige Sterilisationsmittel nach dem Durchtritt durch den engen Querschnitt kondensiert, ist es von Vorteil, wenn bei der Sterilisation beide Strömungswege genutzt werden, da so ein größerer Querschnitt zur Verfügung steht und es nicht zu einer Kondensation des Sterilisationsmittels, insbesondere nach dem Durchtritt des ersten Strömungswegs im Kanal zur Blasdüse, kommen kann.

Gemäß zumindest einer Ausführungsform ist vorgesehen, dass die beiden Strömungswege unterschiedliche Strömungsquerschnitte aufweisen, mit denen in mindestens zwei Betriebszuständen unterschiedliche Volumenströme des Mediums realisierbar sind.

Gemäß zumindest einer Ausführungsform ist vorgesehen, dass im ersten Betriebszustand ein Vorblasen durchführbar ist, bei welchem der Hohlkörper mittels Zuführung des Mediums lediglich teilweise expandiert wird und dass beim zweiten Betriebszustand ein Recyceln durchführbar ist, bei welchem ein Teil des Mediums aus dem vorzugsweise fertig expandiertem Hohlkörper über das erste Ventil zurück in den Druckspeicher führbar ist und dass im dritten Betriebszustand eine Sterilisation der Strömungswege durchführbar ist, bei welchem durch ein Sterilisationsmedium beide Strömungswege gleichzeitig sterilisierbar sind.

Es kann auch daran gedacht sein, dass die Hohlkörperherstellungsmaschine einen Reinraum mit einer kontaminationsarmen Atmosphäre bzw. Umgebung aufweist, innerhalb derer die Hohlkörper herstellbar sind und der Hohlraum des ersten Ventils im offenen Zustand des Ventils mit dem Reinraum strömungstechnisch verbunden ist und dass das Schaltelement einen Faltenbalg aufweist, über welchen ein Antrieb des Schaltelements gegenüber dem Hohlraum, insbesondere luftdicht, abgedichtet ist. Durch die Abdichtung wird der Antrieb des Ventils nicht mit Sterilisationsmedium beaufschlagt und kann so einfacher ausgeführt werden. Zusätzlich können so keine Keime vom Antrieb des Ventils in die Kanäle des Mediums gelangen.

Gemäß zumindest einer Ausführungsform findet die Herstellung bzw. Expansion der Behälter innerhalb eines Raums mit kontaminationsarmer Umgebung statt. Die kontaminationsarme Umgebung, bei der es sich um einen Reinraum handeln kann, kann beispielsweise durch eine oder eine Kombinationen der folgenden Maßnahmen hergestellt werden:
- Die kontaminationsarme Umgebung der Vorrichtung (innerhalb eines Maschinenschutzes) wird unter einen Überdruck im Vergleich zur Umgebungsatmosphäre (Maschinenhalle) gesetzt, indem durch Feinfilter filtrierte Luft zumindest während der Produktion in den Raum eingeblasen wird,
- die Antriebe für verschiedenste Bewegungen der Form oder Blasstation sind außerhalb des Reinraums angeordnet, so beispielsweise die Antriebe für das Öffnen und Schließen der Kavität (Form) und/oder die für das Bewegen einer Reckstange und/oder die für ein Anheben oder Senken eines Behälters und/oder die die Bewegung einer Blas- oder Fülldüse,
- die innere Wandung des Raums wird in regelmäßigen Abständen gereinigt und/oder sterilisiert, beispielsweise über ein Bespritzen oder Bedampfen mit Lauge, Säure, Entkeimungsflüssigkeit oder Wasserstoffperoxid (gasförmig oder flüssig). Insbesondere werden bei der Reinigung und/oder Sterilisation die Innen- und Außenseiten der Kavitäten, Blas- oder Fülldüsen und der Reckstangen miteinbezogen. Insbesondere werden aber auch die inneren Wandungen des Maschinenschutzes einbezogen.
- die kontaminationsarme Umgebung wird gegen die Umgebungsatmosphäre abgedichtet. Bei einem Rundläufer kann es sich bei der Dichtung um ein Wasserschloss oder eine Gummidichtung handeln, welche(s) den drehenden Teil zum stehenden Teil der Vorrichtung abdichtet.

Gemäß zumindest einer Ausführungsformwerden die Vorformlinge vor einem Einbringen in die kontaminationsarme Umgebung sterilisiert.

Gemäß zumindest einer Ausführungsform weist das Schaltelement einen Ventilkolben und ein weiteres, gegenüber dem Ventilkolben bewegliches Element, beispielsweise eine Hülse, auf, durch dessen (deren) Stellung relativ zum Kolben ein Strömungsweg freigebbar ist, wobei es sich bei diesem Strömungsweg um den ersten Strömungsweg handeln kann. In der anderen Stellung wird der erste Strömungsweg durch dieses Element versperrt.

Gemäß zumindest einer Ausführungsform befindet sich der erste Strömungsweg zwischen diesem Element und dem Ventilkolben.

Gemäß zumindest einer Ausführungsform befindet sich der zweite Strömungsweg komplett außerhalb dieses Elements bzw. des Schaltelements und führt an diesem vorbei.

Gemäß zumindest einer Ausführungsform ist der zweite Strömungsweg kürzer als der erste Strömungsweg. Damit kann die kürzeste Verbindung vom Eingang des Ventils über den jeweiligen Strömungsweg zum Ausgang des Ventils bezeichnet sein.

Der Ventilkolben kann insbesondere entlang einer Längsachse beweglich angeordnet sein und wird beispielsweise über den Antrieb bei einem Schließen des Ventils gegen eine Sitzfläche gedrückt (Schließrichtung), innerhalb derer sich der Ausgang des Ventils befindet.

Gemäß zumindest einer Ausführungsform schließt der Winkel des zweiten Strömungswegs mit der Längsachse einen größeren spitzen Winkel ein als der erste Strömungsweg.

Wie schon erwähnt, kann es sich bei dem beweglichen Element um eine Hülse handeln, welche den Ventilkolben vorzugsweise in einer Richtung quer zur Verschieberichtung des Ventilkolbens zumindest bereichsweise umgibt.

Gemäß zumindest einer Ausführungsform ist die Hülse zumindest bereichsweise zwischen dem Ventilsitz am Ausgang des Ventils und dem Ventilkolben angeordnet. An den Positionen der Hülse, wo dies zutrifft, ist ihr Innendurchmesser vorzugsweise kleiner als der Außendurchmesser des Kolbens an seinem dem Ventilsitz zugewandtem Ende.

Beispielsweise kann die Hülse hutförmig ausgebildet sein. Der Hut kann dann in seiner Mitte ein Loch aufweisen, in welchem der erste Strömungsweg endet.

Weiterhin kann vorgesehen sein, dass zwischen der Hülse und dem Ventilkolben der erste Strömungsweg und der zweite Strömungsweg zwischen dem Gehäuse und der Hülse verläuft. Zur Bereitstellung des ersten Strömungswegs kann die Hülse in ihrem Mantel eine oder mehrere Aussparungen aufweisen. Insbesondere kann die Hülse im Durchmesser an den Positionen, wo sie den Kolben umgibt, im Innendurchmesser größer als der Kolben bzw. der Kolbenschaft im Außendurchmesser sein.

Gemäß zumindest einer Ausführungsform ist die Hülse über eine Feder gegenüber dem Ventilkolben vorgespannt.

Dann kann die Feder derart angeordnet sein, dass diese die Hülse mit einer Kraft weg vom Ventilkolben in Richtung des Ausgangs des Ventils vorspannt, wobei vorzugsweise die Kraft der Feder kleiner ist als eine Kraft des Mediums auf die Hülse in Richtung des Ventilkolbens bei einem Zurückfließen des Mediums vom Hohlkörper in den ersten Druckspeicher. Die Feder ist kann insbesondere zwischen der Hülse und dem Kolbenschaft angeordnet sein.

Alternativ oder zusätzlich zur Federvorspannung kann die beispielsweise hutförmige Hülse auch ohne Feder am Kolben angeordnet sein, indem sie beispielsweise nur auf den Kolbenschaft locker aufgeschoben wird oder mit dem Kolbenschaft clipartig verbunden wird, wobei der Clip trotzdem eine Relativbeweglichkeit der Hülse gegenüber dem Schaft zulässt.

Gemäß zumindest einer Ausführungsform kann das erste Ventil einen zweiten Kolben aufweisen, über welchen ein Anschlag für die Hülse oder den Ventilkolben verstellbar ist, wobei der Anschlag im ersten und zweiten Betriebszustand in Richtung auf den Ausgang zugestellt ist und bewirkt, dass lediglich einer der beiden Strömungswege nutzbar ist, und wobei der Anschlag im dritten Betriebszustand, in welchem Sterilisationsgas durch beide Strömungswege geleitet wird, vom Ein- oder Ausgang weggefahren ist, so dass beide Strömungswege freigegeben sind.

Gemäß zumindest einer Ausführungsform der Hohlkörperherstellungsmaschine ist in einem vierten Betriebszustand jeder der Strömungswege durch eine fluiddichte Abdichtung des Kanals durch den Ventilkolben unterbrochen, wobei in diesem Betriebszustand eine Wand des Kanals in unmittelbarem Kontakt mit dem Ventilkolbens steht und durch diesen unmittelbaren Kontakt die fluiddichte Abdichtung erreicht wird.

Mit anderen Worten ist im Unterschied zur obig gezeigten Ausführungsform hinsichtlich Hülse zwischen dem Ventilsitz am Ausgang des Ventils und dem Ventilkolben kein bewegliches Element, insbesondere keine bewegliche Hülse, angeordnet ist.

Gemäß zumindest einer Ausführungsform bildet eine Außenfläche des Ventilkolbens, in dem Bereich, welcher in einer Richtung quer zu einer Verschieberichtung des Ventilkolbens seitlich von dem beweglichen Element, beispielsweise der Hülse, umgeben ist, zumindest ein Mitnehmerelement, insbesondere in Form eines Vorsprungs oder in Form des Anschlags, aus, welches in einer entsprechenden Innenausnehmung der Hülse verschiebebeweglich angeordnet ist.

Denkbar ist, dass das Mitnehmerelement zusammen mit dem restlichen Element/en des Ventilkolbens einstückig ausgebildet ist. Alternativ hierzu ist jedoch auch vorstellbar, dass das Mitnehmerelement ein separates Bauteil darstellt, welches auf Elemente/en des Ventilkolbes lösbar oder unlösbar mechanisch, beispielweise in Form einer Seitenmanchette, befestigt ist.

Gemäß zumindest einer Ausführungsform sind das bewegliche Element, beispielsweise die Hülse, und der Ventilkolben vorspannungsfrei mechanisch miteinander gekoppelt.

Insbesondere kann eine solche vorspannungsfreie mechanische Kopplung zumindest teilweise in Form einer Gleitlagerung ausgeführt sein. Jedenfalls ist in dieser Ausführungsform auf ein Vorspannmittel, beispielsweise auf eine Vorspannfeder, zum Vorspannen der Hülse gegenüber dem Ventilkolben verzichtet.

Gemäß zumindest einer Ausführungsform stehen das bewegliche Element, beispielsweise die Hülse, und der Ventilkolben nur über das Mitnehmerelement in, insbesondere unmittelbaren, mechanischem Eingriff miteinander.

Dies kann heißen, dass bis auf das Mitnehmerelement der Ventilkolben mit keinem weiteren Bereich des beweglichen Elements in mechanischem Kontakt, beispielsweise der Hülse, steht.

Gemäß zumindest einer Ausführungsform sitzt in dem vierten Betriebszustand das Mitnehmerelement an einem dem Ventilsitz zugewandten ersten Aufsitzpunkt der Innenausnehmung auf einer Innenwandung des beweglichen Elements auf.

Gemäß zumindest einer Ausführungsform wird im zweiten und/oder dritten Betriebszustand das bewegliche Element von dem Ventilsitz durch einen Eingriff des Mitnehmerelements in einen dem Ventilsitz abgewandten Aufsitzpunkt der Innenausnehmung von dem Ventilsitz abgehoben.

Die beiden Aufsitzpunkte können insofern in der Verschieberichtung des Ventilkolbens die Innenausnehmung der Hülse in Verschieberichtung nach oben und/oder unten abgrenzen.

Eine Bewegung des Mitnehmerelements kann zwischen den beiden Aufsitzpunkten der Innenausnehmung statt gleitmechanisch auch kontaktfrei zwischen den beiden Aufsitzpunkten erfolgen.

Dies kann heißen, dass der Ventilkolben, und insbesondere dessen Mitnehmerelement, während einer Bewegung zwischen den beiden Aufsitzpunkten keinen mechanischen Kontakt mit der Hülse aufnimmt.

Dies kann daher weiter bedeuten, dass in einer solchen auf und ab Bewegung des Ventilkolbens das Mitnehmerelement nicht durch die Hülse gleitmechanisch geführt ist sondern das Mitnehmerelement vielmehr nur in punktuellem Kontakt an den Aufsitzpunkten des beweglichen Elements mit dem selbigen gerät. Gemäß zumindest einer Ausführungsform weist die Hülse in einer Seitenwand zumindest eine Drosselbohrung auf, und wobei in den Betriebszuständen, eins, zwei und drei, deren jeweils zugeordnete Strömungswege durch diese Drosselbohrung hindurch verlaufen. Die Seitenwand ist dabei eine solche Wandung des beweglichen Elements, welche vorzugsweise nur den Ventilkolben, weiter vorzugsweise, lateral und ringförmig, den Ventilkolben umrandet. Dabei kann die Drosselbohrung nach Art und Form wie in Zusammenhang mit dem ersten Ausführungsbeispiel ausgebildet sein.

Vorzugsweise schließt, beispielsweise im ersten und zweiten Betriebszustand das bewegliche Element fluid dicht mit einer dem beweglichen Element zugewandten Innenfläche des Ventilblocks ab.

Weiter vorzugsweise gilt selbiges fluiddichtes Abschließen auch im Hinblick auf den Eingriff des beweglichen Elements mit einer Außenfläche des Ventilkolbens, sodass, beispielsweise im ersten und im zweiten Betriebszustand, das Medium vorzugsweise nur durch die Drosselbohrung hindurch das Ventil verlassen kann.

Dies kann vorteilhaft sicherstellen, dass ein Strömungsquerschnitt im ersten und im zweiten Betriebszustand gleich ist.

Die Erfindung ist weiterhin auf ein Verfahren gerichtet zum Herstellen von Hohlkörpern in einer Form mittels Beaufschlagung durch ein unter Druck stehendes Medium, wobei das Medium über eine mindestens zwei Ventile aufweisende Ventileinheit zu dem Hohlkörper geleitet wird, wobei ein Eingang eines zweiten Ventils mit einem zweiten, unter einem zweiten Druck stehenden Druckspeicher verbunden ist und ein Ausgang des zweiten Ventils über einen Kanal mit einer Blasdüse verbunden ist, wobei der Eingang eines ersten Ventils mit einem ersten, unter einem ersten Druck stehenden Druckspeicher verbunden ist und der Ausgang des ersten Ventils über einen Kanal ebenfalls mit der Blasdüse verbunden ist, wobei die Blasdüse während eines Teils des Formungsvorgangs das zu formende Material und/oder die Form gegenüber der Umgebung abdichtet, wobei das erste Ventil ein Ventilgehäuse aufweist und innerhalb des Gehäuses zwischen dem Eingang und dem Ausgang ein Hohlraum ausgebildet ist, innerhalb dessen das Medium während des Formungsvorgangs durchgeleitet wird und innerhalb dessen zumindest ein Teil eines Schaltelement angeordnet ist, mit welchem ein Öffnen und ein Schließen des ersten Ventils durchgeführt wird, dadurch gekennzeichnet, dass das Medium zwischen dem Eingang und dem Ausgang des ersten Ventils mindestens zwei durch Material des Gehäuses und/oder des Schaltelements voneinander getrennte Strömungswege durchfliest.

Insbesondere gibt das Schaltelement abhängig von einem Betriebszustand des Ventils, und insbesondere abhängig von der Strömungsrichtung des Mediums durch den Hohlraum, entweder den ersten, den zweiten oder beide Strömungswege frei.

Insbesondere fliest das Medium in einem Produktionsmodus während eines Vorblasens des Hohlkörpers im Wesentlichen nur über den ersten Strömungsweg und während eines Sterilisationsmodus fliest Sterilisationsmedium über beide Strömungswege.

Insbesondere fliest während eines Recyclings von Medium in einem Produktionsmodus das Medium im Wesentlichen nur über den zweiten Strömungsweg zurück in einen Druckspeicher.

Die Herstellung eines einzigen Behälters im Produktionsmodus wird insbesondere in folgenden Schritten in der angegebenen Reihenfolge durchgeführt:
1) Einführen der zu formenden Masse in die Form
2) Abdichten (könnte auch schon vor dem Schritt 1) gemacht werden)
3) Öffnen des ersten Ventils
4) Vorblasen der Masse im ersten Betriebszustand des ersten Ventils durch ersten Strömungsweg
5) Schließen des ersten Ventils
6) Fertigausformen der Masse über das zweite Ventil mit einem höheren Druck als wie beim Vorblasen
7) Ablassen des restlichen Drucks
8) Entnahme des Hohlkörpers aus der Form

Bei Schritt 4 kann auch gleichzeitig eine Reckung der Masse in einer Höhlkörperlängsachse mit einer Reckstange vorgenommen werden.

Zwischen Schritt 6 und 7 wird insbesondere ein Recycling durchgeführt. Dies geschieht insbesondere über das erste Ventil und den zweiten Strömungsweg, es kann aber auch über ein weiteres Ventil der Ventileinheit in einen anderen Druckspeicher recycelt werden.

Beim zweiten Ventil handelt es sich insbesondere um ein Hochdruckventil. Beim ersten Ventil kann es sich auch um ein Hochdruckventil handeln.

Als (Druck-)Medium kann in einem Produktionsmodus beispielsweise ein kompressibles Gas verwendet werden. Insbesondere kann Luft, gefilterte Luft, Sterilluft, entzündbare Gase wie Wasserstoff, ein Wasserdampf-Luftgemisch, Stickstoff, ein Gemisch aus Sterilisationsmittel und Luft oder dergleichen verwendet werden. Es können aber auch inkompressible Medien wie Wasser, Sterilwasser oder Produkt (Cola, Bier, Tee) zum Einsatz kommen. Ebenso sind Kombinationen aus den genannten Medien möglich. Ein Hohlkörper kann auch mit verschiedenen Medien nacheinander geformt werden. So können sich die Medien in unterschiedlichen Druckspeichern unterscheiden. Weiterhin kann Sterilisationsmedium in einem Sterilisationsmodus durch das Ventil geleitet werden. Bei dem Sterilisationsmedium handelt es sich bevorzugt um gasförmiges Wasserstoffperoxid oder eine Mischung aus diesem mit einem anderen Gas, insbesondere Luft. Alternativ oder zusätzlich kann auch Reinigungsmedium durch das Ventil geleitet werden, bei welchem es sich insbesondere um flüssiges Medium wie beispielsweise Lauge handelt.

Die zu formende Masse könnte auch mit kompressiblem Medium vorgeblasen werden und anschließend mit Produkt fertig ausgeformt werden. In diesem Fall ist kein zweiter Druckspeicher nötig, sondern das Produkt wird über das zweite Ventil und anderen Druckerzeugenden Mitteln in den Hohlkörper, beispielsweise über einen Kolben ähnlich einer Pumpe.

Bei der zu formenden Masse bzw. dem zu formenden Material kann es sich beispielsweise um einen bereits erwähnten reagenzglasförmigen Vorformling aus Kunststoff, insbesondere aus PET, PP oder um einen anderen Kunststoff handeln, aber auch um einen extrusionsgeblasenen Schlauch oder um einen Külbel aus Glas, wie er bei Glasblasmaschinen verwendet wird.

Unter Eingang oder Ausgang eines Ventils wird im Allgemeinen ein Durchlass bzw. eine Öffnung verstanden, durch die das Medium in eine gewünschte Richtung fließen kann. Je nach Anwendungsfall (Zeitpunkt der Ventilschaltung, Druckdifferenz zwischen den beiden Seiten) kann ein Eingang auch als Ausgang wirken und umgekehrt. Als Eingang soll hier der in Strömungsrichtung dem Druckspeicher näher gelegene Durchlass verstanden werden.

Eine Abdichtung im ersten Ventil kann in einer alternativen Ausführungsform auch am Eingang des Ventils vorgenommen werden.

Unter abdichtbar bzw. abgedichtet wird verstanden, dass der Hohlkörper derart über Dichtungen abgedichtet wird, dass im Wesentlichen kein Medium während des Formvorgangs ungewollt in die Atmosphäre entweicht.

Bei den zu formenden Hohlkörpern handelt es sich bevorzugt um Flaschen, jedoch sind Behältnisse jeglicher Art mit der Hohlkörperherstellungsmaschine produzierbar: Kanister, Spritzen, Tanks, Container, Bälle, Tassen, Becher und viele weitere.

Das Medium im zweiten Druckspeicher befindet sich im Fall der Formung von PET-Flaschen im Zweistufenprozess typischerweise unter einem Druck von 5 bis 45, insbesondere von 15 bis 35 bar. Wird das eingangs erwähnte Vorblasen mit dem ersten Ventil durchgeführt, so beträgt der Druck im ersten Druckspeicher typischerweise zwischen 3 und 25 bar, insbesondere zwischen 5 und 20 bar. Die Druckangaben sind nicht einschränkend und können je nach zu formenden Material oder Ausprägungen des fertigen Hohlkörpers sehr stark variieren.

Insbesondere ist parallel zum ersten und zweiten Ventil ein drittes Ventil in der Ventileinheit angeordnet, welches mit einem Auslass für das Medium in die Atmosphäre (bevorzugt über einen Schalldämpfer) verbunden ist.

Parallel zu den ersten drei Ventilen kann zusätzlich auch ein viertes Ventil angeordnet sein, welches mit einem dritten Druckspeicher verbunden ist, welcher unter einem niedrigeren Druck steht, als der zweite und insbesondere auch als der erste Druckspeicher.

Die Verwendung von Druckspeichern niedrigeren Drucks ist nicht nur zur Steuerung des Aufblasprozesses (Vorblasen) nötig, sondern kann insbesondere zusätzlich relevant zur Wiederverwendung des Druckmediums sein - insbesondere bei kompressiblen Medien wie Luft. Nach dem Fertigformen des Hohlkörpers unter dem höchsten Druck aus dem zweiten Druckspeicher kann durch Öffnung eines Ventils, welches mit einem Druckspeicher geringeren Drucks verbunden ist, das Medium von dem Hohlkörper in einen Druckspeicher geringeren Drucks zurückströmen, bevor am Ende des Blasvorgangs der verbleibende Rest des Mediums im Hohlkörper (und den Kanälen) in die Atmosphäre oder über die Blasdüse direkt in den Reinraum entlassen wird.

Beim mehrstufigen Recycling wird nach dem Formen des Hohlkörpers unter dem höchsten Druck insbesondere das Ventil geöffnet, dessen zugeordneter Druckspeicher den zweithöchsten Druck aufweist, anschließend das Ventil, dessen zugeordneter Druckspeicher den dritthöchsten Druck u.s.w.. Es findet in anderen Worten ausgedrückt ein kaskadenförmiger Druckabbau im Hohlkörper statt.

Bei der Zuleitung von recyceltem Medium von den Druckspeichern in den nächsten zu formenden Hohlkörper in der Blasstation oder in einen Hohlkörper einer anderen Blasstation der Hohlkörperherstellungsmaschine (wenn die Druckspeicher mit zwei Blasstationen verbunden sind), kann der Blasdruck wieder kaskadenförmig im Hohlkörper aufgebaut werden. Die Ventile werden dann im Vergleich zur Wiedergewinnung in umgekehrter Reihenfolge geöffnet. Wenn zwischen dem Vorblasen und dem Fertigblasen noch Medium aus einem weiteren Druckspeicher in den Hohlkörper geleitet wird, spricht man von dem oben genannten Zwischenblasen. Auf diese Weise wird immer ein Druckluftgefälle bereitgestellt, durch welches das Medium in den Hohlkörper strömen kann.

Insbesondere handelt es sich bei der zu formenden Masse um einen Hohlkörper mit nur einer Öffnung.

Weiterhin können auch zwei Ventile als Auslass dienen, welche gleichzeitig öffenbar sind. Eines dient zur Sicherheit, falls das andere ausfällt.

Eine Abdichtung der zu formenden Masse gegenüber der Umgebung wird insbesondere durch eine Blasdüse bereitgestellt, welche auf der Form selbst und/oder auf der zu formenden Masse zur Abdichtung aufsitzt. Je nach Ausführungsform schafft man mit einer Abdichtung auf der Form Platz für die Anordnung von Ventilen oder reduziert den Totraum, wenn man auf der zu formenden Masse abdichtet, wobei das erstere das zweite nicht ausschließt.

Insbesondere kann die Ventileinheit fest mit der Blasdüse verbunden werden. Durch einen Hub der Blasdüse beim Abdichtvorgang kann somit ein Totraum reduziert werden.

Bei der Hohlkörperherstellungsmaschine handelt es sich insbesondere um eine kontinuierlich arbeitende Streckblasmaschine, an der eine Vielzahl von Blasstationen angeordnet sind und in die temperierte, reagenzglasförmige Vorformlinge aus Kunststoff, insbesondere PET, eingegeben und in den Blasstationen zu Hohlkörpern umgeformt werden. Die Blasstationen können hierbei gleichmäßig verteilt entlang des Umfangs eines Blasrades angeordnet sein. Die Vorformlinge werden während des Blasens kontinuierlich in der Form der Blasstation entlang eines kreisförmigen Transportpfads transportiert. Bei solchen Hohlkörperherstellungsmaschinen wird die Druckluft von einem stationär angeordneten Kompressor über einen Kanal einer Drehverbindung in einen drehenden Teil der Maschine hineingeführt und insbesondere bei Nutzung eines reinen Wiedergewinnungsspeichers über einen weiteren Kanal in der Drehverbindung zur weiteren Verwendung wieder hinausgeführt. Der Kompressor kann sich in manchen Ausführungsformen auch auf dem Blasrad befinden.

Es können hier ebenfalls alle Mittel und Ausführungsformen der Beschreibung der Vorrichtung beim Verfahren eingesetzt werden und umgekehrt, ebenso die der Figuren.

### Figurenbeschreibung

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Draufsicht einer erfindungsgemäßen Hohlkörperherstellungsmaschine.
Figur 2 zeigt eine Ausführungsforme der Ventileinheit.
Figur 3 zeigt eine erfindungsgemäße Ausführungsform des ersten Ventils.
Figur 4 zeigt einen ersten Betriebszustand des Ventils aus Figur 3.
Figur 5 zeigt einen zweiten Betriebszustand des Ventils aus Figur 3.
Figur 6 zeigt einen dritten Betriebszustand des Ventils aus Figur 3.
Figur 7 zeigt eine erfindungsgemäße Ausführungsform des ersten Ventils in einem vierten Betriebszustand.
Figur 8 zeigt einen ersten Betriebszustand des Ventils aus Figur 7.
Figur 9 zeigt einen zweiten Betriebszustand des Ventils aus Figur 7.
Figur 10 zeigt einen dritten Betriebszustand des Ventils aus Figur 7.

Für gleiche oder gleich wirkende Elemente der Erfindung werden identische Bezugszeichen bzw. Geometrien verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar.

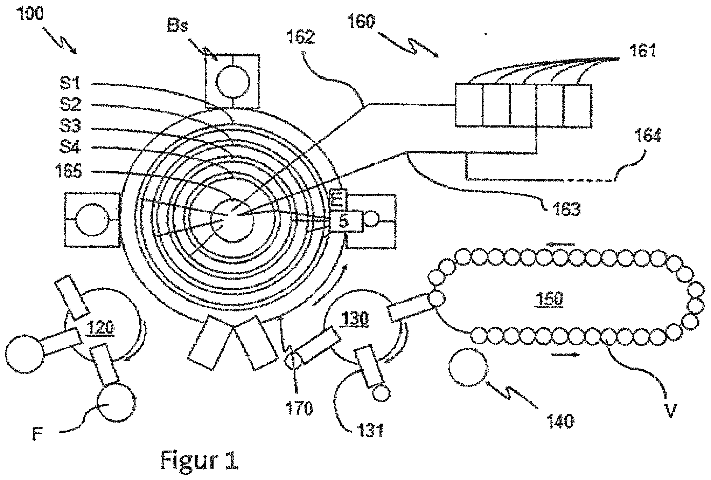

Figur 1 zeigt eine schematische Draufsicht einer Hohlkörperherstellungsmaschine 100. In diesem Ausführungsbeispiel ist sie als kontinuierlich arbeitende Streckblasmaschine ausgeführt. Vorformlinge V werden über einen sogenannten Sägezahnstern 140 einer Vorrichtung zur Temperierung 150 zugeführt, in der die Vorformlinge V mittels auf einer umlaufenden Kette angeordneten Heizdornen durch einen nicht näher dargestellten Heiztunnel, bestehend aus einer Vielzahl von Infrarotheizstrahlern und gegenüberliegenden Reflektoren, kontinuierlich durchgeführt werden. Bei der Vorrichtung zum Temperieren 150 kann es sich auch um einen Rundläufer handeln, an dessen Umfang eine Vielzahl von Erwärmungsstationen wie Mikrowellenresonatoren oder Heiztaschen angebracht sind (nicht gezeigt). Nach der Temperierung werden die Vorformlinge V von Greifern 131, welche auf einem Einlaufstern 130 umlaufen, an ein Blasrad 170 übergeben, auf dessen Umfang eine Vielzahl von Blasstationen Bs angeordnet ist. Nach dem Formgebungsprozess in der Blasstation Bs werden die fertig geblasenen Flaschen F von einem Entnahmestern 120 entnommen. Anschließend erfolgt ein Transport der Flaschen F zu einer nicht gezeigten Etikettierung, Abfüllung, Verpackung in einer Umverpackung und/oder einer Palettierung. Die Transportwege der Vorformlinge V und der Flaschen F bzw. die Drehrichtungen der einzelnen Elemente sind jeweils mit Pfeilen angedeutet.

Vor dem Blasrad 170 befindet sich eine nicht gezeigte Sterilisationseinrichtung zur Sterilisation der Vorvormlinge V. Ab ihr beginnt auch ein nicht dargestellter Reinraum, der den Transportpfad der Behälter umgibt und der sich bis zu einem Verschließer der Abfüllanlage erstreckt.

Die einzelnen Blasstationen Bs werden über einen Kompressor 160 mit mehreren Kompressorstufen 161, mit einem gasförmigen Medium, hier steriler Druckluft, versorgt. In der ersten Stufe (rechts dargestellt) wird Luft auf einen Druck von beispielsweise 5 bar komprimiert, in der nächsten Stufe auf 10 bar und so weiter, bis sie nach der Endstufe einen Druck von 45 bar aufweist. Sodann wird die Luft über einen nicht gezeigten Filter und eine Zuführleitung 162 einem Drehverteiler 165 zugeführt, welcher den stationären Teil der Hohlkörperherstellungsmaschine 100 mit dem drehenden Teil (Blasrad 170) verbindet. Auf dem Drehverteiler 165 sitzen ebenfalls mehrere nicht dargestellte Druckminderer, welche den vom Kompressor 160 bereitgestellten Druck auf unterschiedliche Druckniveaus für ebenfalls auf dem Blasrad 170 angebrachte Ringleitungen S1 bis S3 reduzieren. Die Ringleitungen S1, S2, S3 dienen als Druckspeicher und/oder -verteiler für die einzelnen Blasstationen Bs auf dem Blasrad 170. In Ringleitung S3, dem ersten Druckspeicher, wird ein Vorblasdruck von beispielsweise 10 bar bereitgestellt, in Ringleitung S2 ein Zwischenblasdruck von beispielsweise 20 bar und in Ringleitung S1, dem zweiten Druckspeicher, ein Fertigblasdruck von beispielsweise 35 bar. Jede Blasstation Bs umfasst dabei eine Ventileinheit 5, welche mit den einzelnen Ringleitungen S1, S2, S3 verbunden ist und welche die einzelnen Ringleitungen S1, S2, S3 mit dem aufzublasenden Vorformling V verbindet. Nach dem Abdichten des Vorformlings V mittels einer Blasdüse 8 (nächste Figur) wird dieser nacheinander und in folgender Reihenfolge mit den einzelnen Ringkanälen verbunden: S1, S2, S3. Nach dem fertigen Expandieren wird die Luft aus der Flasche F - immer noch unter dem Fertigblasdruck stehend - zuerst wieder in den Ringkanal S2 zurückgeführt, vorteilhafterweise so lang, bis der Druck in der Flasche F annähernd den Druck im Ringkanal S2 erreicht hat. Anschließend wird die Luft in der Flasche F - jetzt annähernd unter dem Druck des Ringkanals S2 stehend - dem Kanal S3 zugeführt. Es kann auch vorteilhaft sein, zuerst den Vorblaskanal S3 für eine Rückführung der Luft zu nutzen, wenn sichergestellt werden soll, dass in diesem immer ein Mindestdruck bereitgestellt werden soll. Auch kann die Rückführzeit über den Druck in einem Kanal S2, S3, S4 mittels eines nicht dargestellten Drucksensors geregelt werden. Auf die Druckminderer, welche den Druck für die Kanäle S2 und S3 zur Verfügung stellen, könnte während der Produktion auch verzichtet werden, wenn genügend Luftmenge recycelt wird, für ein Anfahren der Blasmaschine sind sie jedoch von Vorteil.

Anstatt nun die verbleibende Luft über einen Auslass E an die Atmosphäre entweichen zu lassen, wird die Blasluft anschließend nochmals bis zu einem Niveau von 3-5 bar in den Kanal S4 zurückgespeist. Da das Vorblasen aus Kanal S3 unter einem gewissen Druck von hier 10 bar den ersten Schritt in der Herstellung des Hohlkörpers darstellen muss, dient der Ringkanal S4 aufgrund seines niedrigeren Druckniveaus in diesem Ausführungsbeispiel ausschließlich der (Zwischen-) Speicherung von rückgeführter Blasluft aus der Flasche F und nicht zum Blasen. Von dort aus kann die Luft entweder noch auf dem Blasrad 170 beispielsweise Vorsteuerventilen 9 oder anderen Antrieben der Blasstationen Bs (z.B. einem Antrieb für Reckstangen 60) zur Verfügung gestellt werden oder über eine weitere Leitung und durch den Drehverteiler 165 zurück in den stationären Teil der Maschine über Leitung 163 überführt werden. Von dort kann die Luft beispielsweise in eine Zwischenstufe des Kompressors 161 zurückgespeist oder über Leitung 164 dem Hallendruckluftnetz oder anderen Verwendungen wie einer Flaschenbodennachkühlung oder einer Etikettier- oder Füllmaschine zugeführt werden.

Die Ringleitungen S1, S2, S3, S4 können auch nur bereichsweise ringförmig ausgebildet sein. Beispielsweise kann ein Ringkanal S1, S2, S3, S4 auch durch zwei halbkreisförmige Hälften gebildet werden. Allgemein sollen im Folgendem die Druckspeicher mit S bezeichnet werden.

Insbesondere kann auch auf die Druckspeicher S2 und S4 verzichtet werden.

Der bereits erwähnte Auslass E ist an jeder Station Bs vorhanden und dient dem Auslass der verbleibenden 3-5 bar in der Flasche F, bevor die Blasdüse 30 wieder hochgefahren und die Flasche F entnommen wird. In diesem Fall wird der Druck in der Flasche F nur bis zu einem bar Überdruck über den Auslass E abgelassen. Danach wird das Auslassventil 50 geschlossen und der Rest der Luft über die Blasdüse 30 in den Reinraum abgeführt. Auf diese Weise ist sichergestellt, dass keine Luft über den Auslass in das Innere des Reinraums kommen kann.

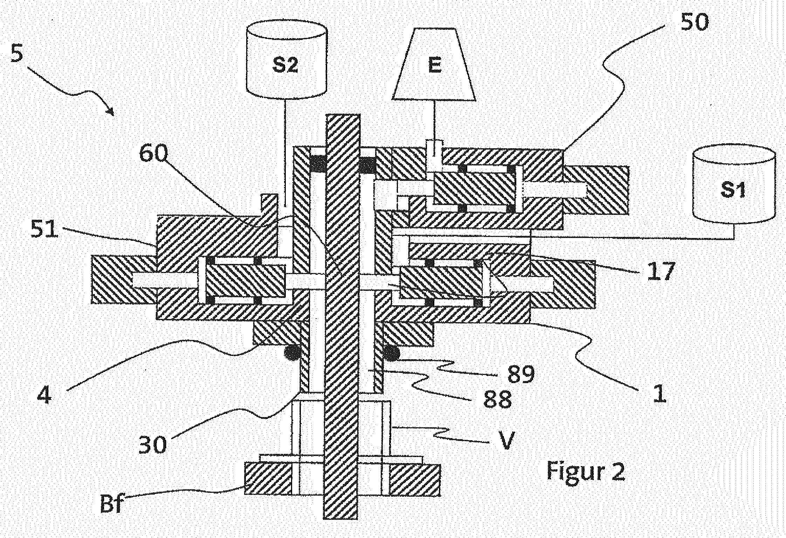

Figur 2 zeigt eine Ausführungsform, bei der erste und zweite Ventile 1, 51 und das Auslassventil 50 an bzw. teilweise in einem gemeinsamen Ventilblock 4 angeordnet sind. Die Ventile 1, 50 und 51 sind hier nur schemenhaft angedeutet. Die Ventile 1, 51 sind insbesondere in einer ringförmigen Anordnung um den mittleren Hauptströmungskanal 88 bzw. um die verlängerte Achse des zu formenden Hohlkörpers V angeordnet. Das Auslassventil 50 ist oberhalb des Ventils 1 angeordnet, bevorzugt ist dieses jedoch im selben Ring wie die Ventile 1 und 51 angeordnet (hinter der Zeichenebene). Es können auch noch weitere Ventile im selben Ring vorhanden sein. Die einzelnen Druckspeicher S / bzw. der Auslass E sind über nicht dargestellte Verbindungsrohre - oder Schläuche und Bohrungen im Ventilblock 4 an die Eingänge der einzelnen Ventile 1, 50 und 51 angeschlossen. Die Reckstange 60 ist durch den mittleren Hauptströmungskanal 88 verfahrbar. Der mittlere Hauptströmungskanal ist eine Bohrung durch den Ventilblock 4. Die Blasform Bf, in der der Rohling V geblasen wird, ist nur mit ihrem oberen Rand dargestellt, auf der der Rohling oder Vorformling V mit seinem Tragring aufliegt. An der Blasdüse 30 ist eine Dichtung 89 angeordnet, welche sich nach dem Herunterfahren der Ventileinheit 5 an die obere Kante des Rohlings V dichtend anlegt. Alternativ ist auch eine Abdichtung auf der Oberkante der Blasform Bf oder am Tragring möglich. Ebenso ist es denkbar, dass die Blasdüse 30 relativbeweglich zum Ventilblock 4 gestaltet ist und der Block 4 samt seiner Ventile 1, 51, 50 stationär auf dem Blasrad bzw. zur Blasform Bf angeordnet ist. Insbesondere sind das zweite Ventil 51 und das Auslassventil 50 im Wesentlichen gleich aufgebaut und weisen lediglich einen Strömungsweg auf (so wie gezeichnet). Das erste Ventil 1 ist hingegen mit zwei Strömungswegen versehen, was in den folgenden Figuren genauer beschrieben wird.

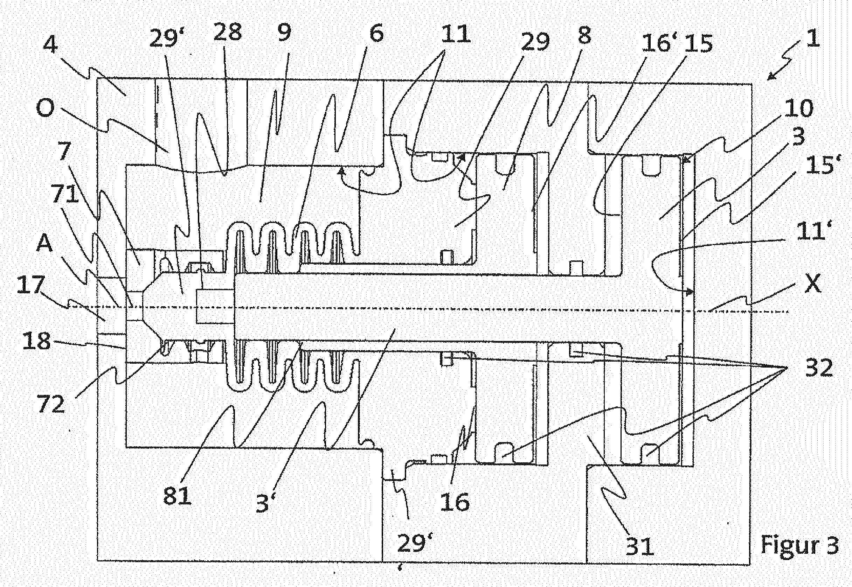

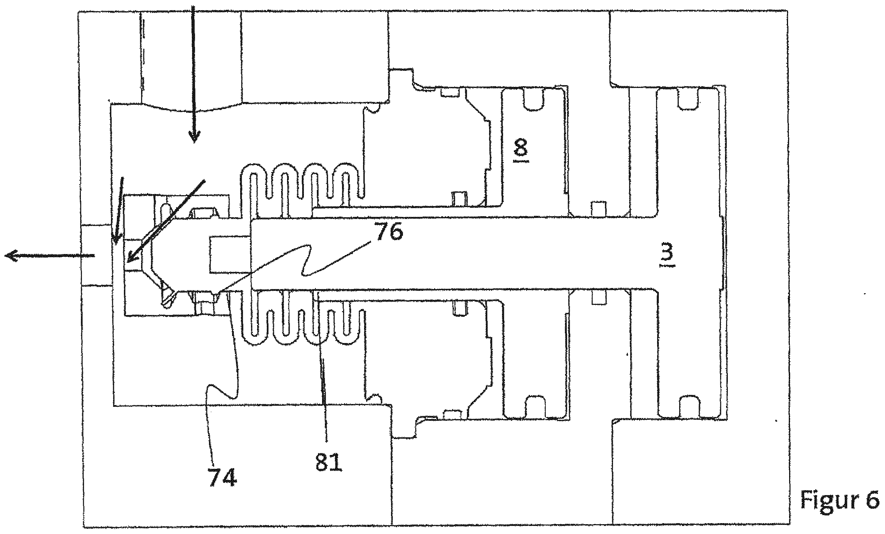

Die Figuren 3 bis 6 zeigen unterschiedliche Betriebszustände des Ventils, wobei anders als gezeichnet ein größerer Abstand zwischen der hinteren Ansteuerfläche 15' des Ventilkolbens 3 und der Gehäusefläche 11' vorhanden ist und der Kolben 3 in der Figur 6 in einer Position weiter rechts verfahren ist als in dieser Figur gezeigt. Im Folgenden soll "hinten" als in der jeweiligen Figur rechts, also in Richtung der Gehäusefläche 11' und vorne als in der Figur links, also in Richtung des Auslasses A, verstanden werden.

Figur 3 zeigt eine Vergrößerung des ersten Ventils 1 in einer Schnittansicht, wobei zwecks der Übersichtlichkeit auf Schnittschraffuren verzichtet wurde.

Das Schaltelement 10 des Ventils 1 weist einen pilzförmigen Ventilkolben 3 mit einem zylinderförmigen Kolbenschaft 3' und ein weiteres Element, hier eine Hülse 7, auf. Der Ventilkolben 3 weist einen Faltenbalg 6 auf. Dieser ist an seinem vorderen Ende 29' über ein Gewinde 28 mit dem Kolben 3 fest verbunden und an seinem hinteren Ende 29 über eine Wulst 29" fest zwischen zwei Gehäuseteilen eingespannt. Die Falten des Faltenbalgs 6 können über eine Bewegung des Ventilkolbens 3 somit gedehnt werden. Er lässt einen Gesamthub im einstelligen Millimeterbereich zu. Hier in dieser Figur ist der Faltenbalg 6 gedehnt. Der Faltenbalg 6 wirkt auch als Feder, wobei er sich in den gestauchten zustand zurückziehen will.

Der Kolben 3 ist entlang der Achse X relativ zum Gehäuse 11 beweglich. Die Bewegung des Kolbens 3 wird über zwei nicht gezeigte Vorsteuerventile, welche wahlweise zum einen einen pneumatischen Steuerdruck zwischen einer Gehäusewulst 31 und einer zweiten Wirkfläche '15 des Kolbens 3 und zum anderen einen pneumatischen Steuerdruck zwischen der hinteren Gehäusewand 11' und der ersten Steuerfläche 15' des Kolbens 3 aufbauen können. In der gezeigten Darstellung ist das Ventil 1 geschlossen, wobei gerade der Steuerdruck auf die Fläche 15' wirkt und der Raum zwischen der Fläche 15 und der Wulst 31 druckentlastet ist. Der Kolben 3 wird somit nach vorne Richtung Auslass A gedrückt. Dieser Betriebszustand kann als vierter Betriebszustand bezeichnet werden.

Um das vordere Ende des Kolbens 3 bzw. des Faltenbalgs 29' ist bereichsweise eine Hülse 7 angeordnet, welche relativbeweglich zum Kolben 3 entlang der Längsachse X angeordnet ist. In der gezeigten Stellung wird die hutförmige Hülse vom Kolben 3 ebenfalls Richtung Auslass A gedrückt. Die Hülse ist hier über eine Feder 72 zum Kolben 3 bzw. zum Faltenbalgende 29' vorgespannt und wird von der Feder 72 nach vorne gedrückt. Die Hülse 7 weist weiterhin eine Drosselbohrung 71 auf, welche im Durchmesser kleiner ist als der Auslass A bzw. der sich dem Auslass A anschließende Kanal 17. Die Sitzfläche 18 zwischen Gehäuse 11 und der Hülse 7 umgibt den Kanal 17 ringförmig.

Innerhalb des Gehäuses 11 befindet sich der Hohlraum 9, innerhalb dessen u.a. die Hülse 7 und der Faltenbalg 6 angeordnet sind. Der Hohlraum 9 ist zylinderförmig und symmetrisch zur Mittelachse X angeordnet. Das Medium wird durch den Hohlraum 9 entweder vom Eingang O zum Ausgang A oder andersrum geleitet, je nach dem, ob auf der Eingangs- oder Ausgangsseite der höhere Druck herrscht.

In dem Ventil ist ein zweiter Kolben 8 angeordnet, der ebenfalls über zwei nicht gezeigte Vorsteuerventile an den Wirkflächen 16, 16' so wie der Kolben 3 pneumatisch ansteuerbar ist. Die Vorsteuerventile beider Kolben 8,3 sind mit einer Steuervorrichtung verbunden, welche programmgesteuert Signale an die vier Vorsteuerventile weitergibt. Der zweite Kolben 8 weist in seiner Mitte entlang der Längsachse X eine Bohrung auf, dass der Schaft 3' des Kolbens 3 durchtreten kann. In anderen Worten wird der Kolbenschaft 3' vom zweiten Kolben 8 ringförmig umgeben.

Die hintere Wirkfläche 16' des zweiten Kolbens 8 weist im Gegensatz zur Darstellung eine größere Fläche auf als die Wirkfläche 15 und die Wirkfläche 15' des Kolbens 3. Auf diese Weise kann bei gleichem von den Vorsteuerventilen zur Verfügung gestelltem Druck der Kolben 8 einen Anschlag 81 für den Kolben 3 bzw. dessen Faltenbalg 6 bilden, da er mit einer größeren Kraft nach vorne gedrückt wird, als der Kolben 3. Der Anschlag 81 muss dabei nicht zwangsweise am Faltenbalg 6 angreifen.

Der zweite Kolben 8 wird insbesondere stets mit einer höheren Kraft beaufschlagt als der Ventilkolben 3.

Hier in dieser Ausführungsform weist der Faltenbalg 6 vier Falten auf, wobei der Anschlag 81 auf die vorderen zwei Falten wirkt. In dem Fall unterstützt der zweite Kolben 8 den Kolben 3, gegen das Zurückziehen des Faltenbalgs 6 nach hinten anzukämpfen.

Von vorne nach hinten sind die einzelnen Teile in folgender Reihenfolge mit deren jeweiligen Volumenschwerpunkten angeordnet: Das Element bzw. Hülse 7, Faltenbalg 6, Kolben 3.

Zwischen Faltenbalg 6 und Kolben 3 befindet sich insbesondere der zweite Kolben 8.

Die Kolben 3, 8 sind über Dichtungen 32 gegenüber einander und dem Gehäuse luftdicht abgedichtet. Der Faltenbalg bzw. seine Wulst 29" ist ebenfalls luftdicht mit dem Gehäuse abgedichtet.

Der Faltenbalg 6, der Kolben 3, die Dichtungen 32 und der zweite Kolben 8 sind im Wesentlichen rotationssymmetrisch zur Achse X.

Im gezeigten geschlossenen Betriebszustand drücken beide Kolben 3, 8 nach vorne.

Die Mittelachsen der Kanäle des Ein- und Ausgangs O,A stehen im Wesentlichen senkrecht aufeinander, was im Gegensatz zu einer Parallelität den Vorteil eines kleineren Strömungswiderstands hat.

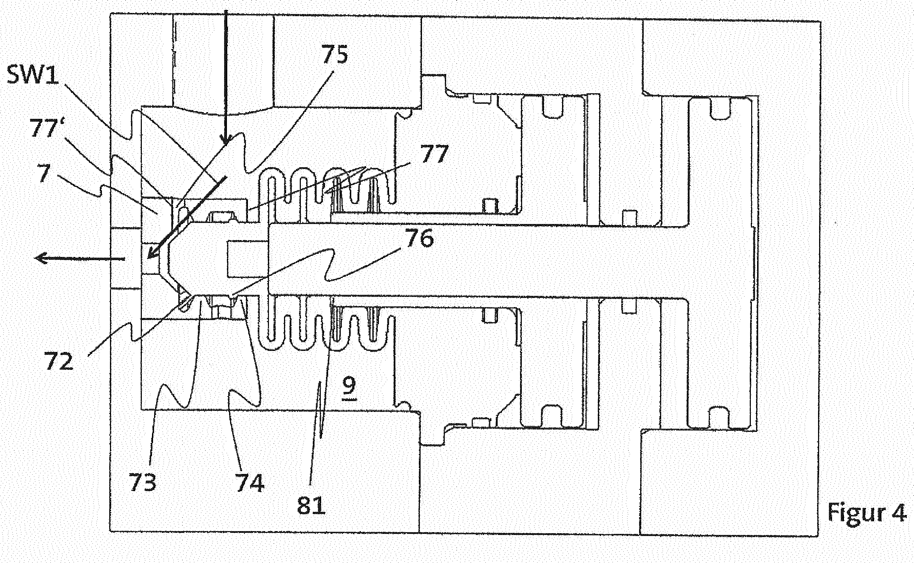

Die Figur 4 zeigt das Ventil 1 im ersten Betriebszustand, bei dem ein Vorblasen des Hohlkörpers V durchgeführt wird. Es ist zu erkennen, dass nun der Kolben 3 nach hinten gedrückt wird, wobei der zweite Kolben 8 noch die zwei hinteren Falten des Faltenbalgs 6 nach vorne gedrückt hält bzw. dehnt. Durch den Anschlag 81 für den Faltenbalg 6 befindet sich der Kolben 3 nicht in seiner hinteren Endlage, sondern ca. in der Mitte zwischen beiden Endlagen. Die beiden vorderen Falten des Balgs 6 sind so weit auf Anschlag gestaucht, dass sie keine weitere Bewegung des Kolbens 3 nach hinten zugelassen wird.

In dieser Figur ist auch der erste Strömungsweg SW1 gezeigt, der mit einem Pfeil angedeutet ist. Er verläuft zwischen dem Element 7 und der Schalteinheit 10 bzw. dem Kolben 3 bzw. dem Faltenbalg 6.

Dadurch, dass im ersten Druckspeicher S3 in dieser Prozessphase ein höherer Druck herrscht als im zu formenden Material bzw. dem Hohlkörper V, strömt das Medium vom Eingang O zum Ausgang A des Ventils 1.

Insbesondere wird der erste Strömungsweg während vom Medium in allen Betriebszuständen, in denen Medium durch das Ventil 1 strömt, nur in der Richtung vom Eingang O zum Ausgang A durchströmt.

Durch die im Hohlraum 9 wirkende Strömung bzw. den wirkenden Druck auf die Flächen 77, 77' wird das Element 7 in dieser Prozessphase nach vorne auf den Sitz 18 gedrückt.

Weithin ist zu erkennen, dass das Element 7 zwei Anschläge 73, 74 aufweist, durch die es auf dem Kolben, 3 bzw. dessen Faltenbalg 6 gehalten wird. In dieser Stellung wird der Anschlag 74 gerade noch nicht von dem Anschlag 76 des Kolbens 3 berührt, so dass noch eine Kraft auf den Sitz 18 wirken kann.

Zusätzlich kann (optional) eine Feder 72 vorgesehen sein, welche das Element 7 zusätzlich nach vorne auf den Sitz 18 drückt.

Wie hier zu erkennen ist, ist das Element 7 hülsenförmig ausgeprägt. Entlang ihres Umfangs weist die Hülse mehrere Aussparungen auf, die einen Teil des Strömungswegs SW1 bilden. In anderen Worten besteht der äußere Umfang der Hülse 7 aus mehreren Armen, welche sich in parallel zur Längsachse X ausgehend von einem Ring der Hülse auf der vorderen Seite erstecken. Jeder Arm weist dabei insbesondere die Anschläge 73, 74 auf. Jeder Arm ist insbesondere ein bisschen biegbar ausgestaltet, so dass bei der Montage der Anschlag 74 über den umlaufenden Anschlag 76 des Kolbens 3 übergeschoben (geclipst) werden kann. Die Hülse 7 besteht vorzugsweise aus dem Material Peek. Die Kolben 3, 8 sind im Wesentlichen aus Kunststoff gefertigt. Der Kolbenschaft 3' und der Faltenbalg 6 sind insbesondere aus unterschiedlichen Kunststoffen gefertigt.

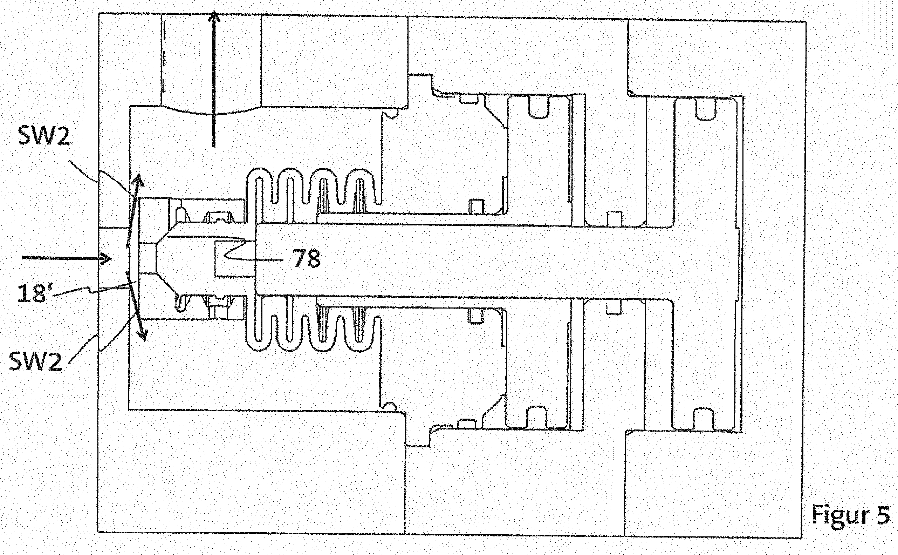

In Figur 5 ist der zweite Betriebszustand gezeigt, welcher vorliegt, wenn ein Recycling von Medium durchgeführt wird. Hier zeigt der Pfeil SW2 den zweiten Strömungsweg. Da im Hohlkörper ein höherer Druck vorliegt als im Druckspeicher S3, strömt das Medium vom Ausgang A zum Eingang O. Der auf die Sitzfläche 18' wirkende Druck bzw. die durch die Fließgeschwindigkeit des Mediums wirkende Kraft auf die Fläche 18' drängt dabei das Element 7 nach hinten. Wenn eine Feder 72 vorgesehen ist, so ist diese Kraft auch größer als die Kraft der Feder 72.

Man erkennt weiterhin, dass sich die Kolbenstellungen im Vergleich zum ersten Betriebszustand nicht verändert haben, sondern lediglich die Position der Hülse 7 verändert wurde. Der zweite Strömungsweg verläuft unmittelbar zwischen Gehäuse 11 und Element 7. Der erste Strömungsweg wird durch die Kraft von dem Medium an der kegelförmigen Sitzfläche 78 blockiert.

Figur 6 zeigt den dritten Betriebszustand. Anstatt des Mediums, welches im ersten und zweiten Betriebszustand durch das Ventil geflossen ist, fliest nun ein Sterilisationsmittel oder Reinigungsmittel vom Eingang O zum Ausgang A durch beide Strömungswege SW1 und SW2. Das Element / die Hülse 7 kann dabei mit der Feder 72 oder alternativ nur durch das Sterilisationsmittel nach vorne gedrückt werden. Der Anschlag 76 berührt dabei Anschlag 74. Der Kolben 3 befindet sich hier in seiner hintersten Stellung, genau so wie der zweite Kolben 8. Dies ist möglich, weil der Anschlag 81 jetzt auch zurückgezogen ist. Der Faltenbalg 6 ist entspannt bzw. gestaucht.

Der zweite Strömungsweg SW2 wird in unterschiedlichen Betriebszuständen in unterschiedliche Richtungen durchflossen.

Optional kann in diesem dritten Betriebszustand auch das Recycling durchgeführt werden, wenn man dafür einen großen Querschnitt zur Verfügung stellen will. Alternativ kann man das Recycling auch in einem fünften Betriebszustand durchführen (nicht gezeigt), in dem beide Kolben 3, 8 in ihrer hintersten Stellung sind und das Element 7 nach hinten geschoben wird.

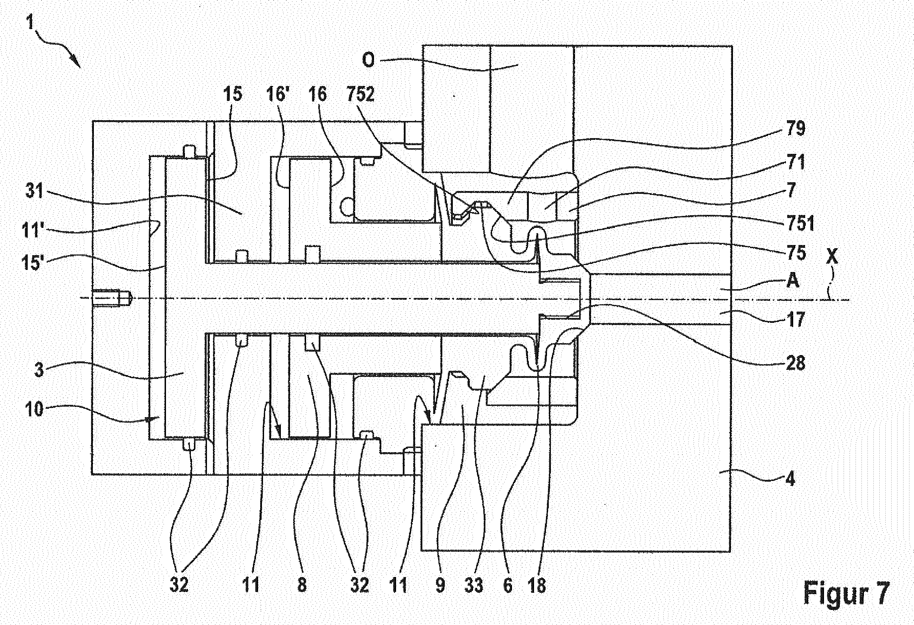

Die Figuren 7 bis 10 zeigen in schematischen Ansichten ein weiteres Ausführungsbeispiel des hier beschriebenen Ventils 1. Im Folgenden wird daher nur auf die zu dem obigen Ausführungsbeispiel gezeigten Unterschiede hinsichtlich des Ventils 1 Bezug genommen.

Dazu ist in der Figur 7 ein vierter Betriebszustand (Verschließzustand, Ventil geschlossen) des Ventils 1 gezeigt, bei dem jeder der Strömungswege SW1, SW2, SW3 durch eine fluiddichte Abdichtung des Kanals 17 durch den Ventilkolben 3 verschlossen ist, wobei in diesem Betriebszustand eine Wand des Kanals 17 in unmittelbarem Kontakt mit dem Ventilkolben 3 steht und durch diesen unmittelbaren Kontakt die fluiddichte Abdichtung erreicht wird.

Dabei bildet die Außenfläche des Ventilkolbens 3 in dem Bereich, welcher in einer Richtung quer zu einer Verschieberichtung X des Ventilkolbens 3 seitlich von der beweglichen Hülse 7 umgeben ist, zumindest ein Mitnehmerelement 33, insbesondere in Form eines Vorsprungs, aus, welcher in einer entsprechenden Innenausnehmung 75 der Hülse 7 verschiebebeweglich angeordnet ist.

Zudem sind die Hülse 7 und der Ventilkolben 3 vorspannungsfrei mechanisch miteinander gekoppelt.

Des Weiteren stehen die Hülse 7 und der Ventilkolben 3 nur über das Mitnehmerelement 33 in mechanischem Eingriff miteinander.

In dem vierten Betriebszustand der Figur 7 sitzt das Mitnehmerelement 33 an einem dem Ventilsitz 18 zugewandten ersten Aufsitzpunkt 751, beispielsweise dem Anschlag 73 der Innenausnehmung 75 (siehe erstes Ausführungsbeispiel), auf einer Innenwandung, insbesondere einer Innenseite, der Hülse 7 auf.

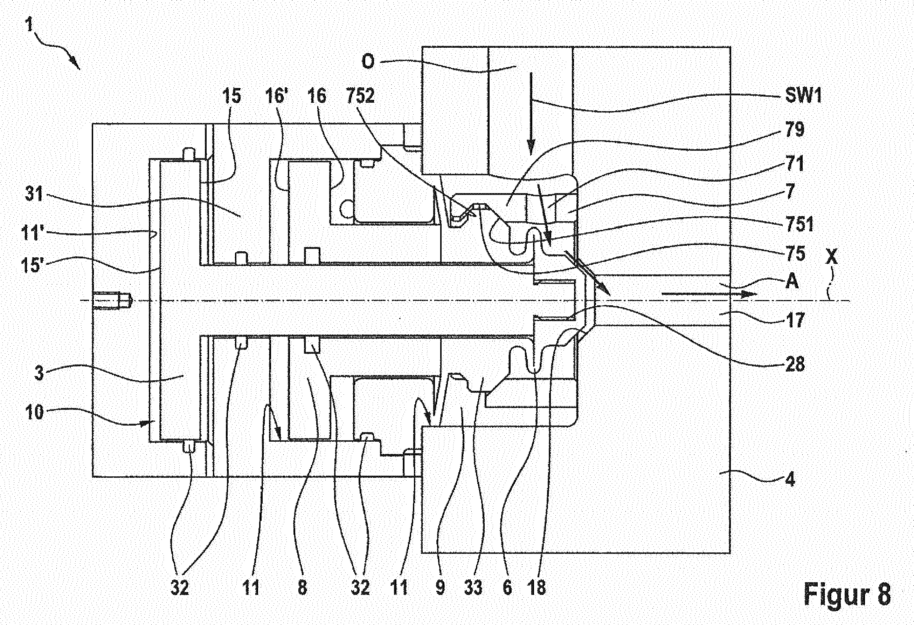

Die Figur 8 zeigt den Strömungsweg SW1 während eines Vorblasens. Im Unterschied zu der Figur 4 gelangt daher die Vorblasluft vom Eingang O zum Ausgang A über eine Seitenwand 79 der Hülse 7 zu dem Ausgang A. Dazu wird die Blasluft ausgehend vom Eingang O durch eine Drosselbohrung 71 in der Seitenwand 79 direkt zum Ausgang A geführt.

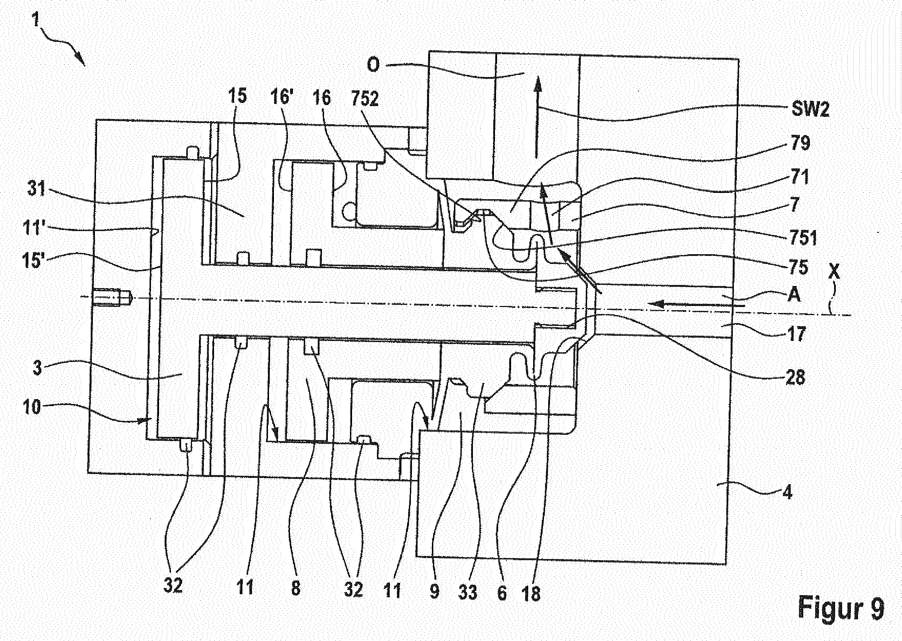

In der Figur 9 ist ein Recyling (zweiter Betriebszustand) der Blasluft entlang des Strömungswegs SW2 gezeigt. Auch hierbei ist erkennbar, dass die zu recycelnde Luft vom Ausgang O und durch die Drosselbohrung 71 in der Seitenwand 79 der Hülse 7 hindurch zu dem Eingang O gelangt.

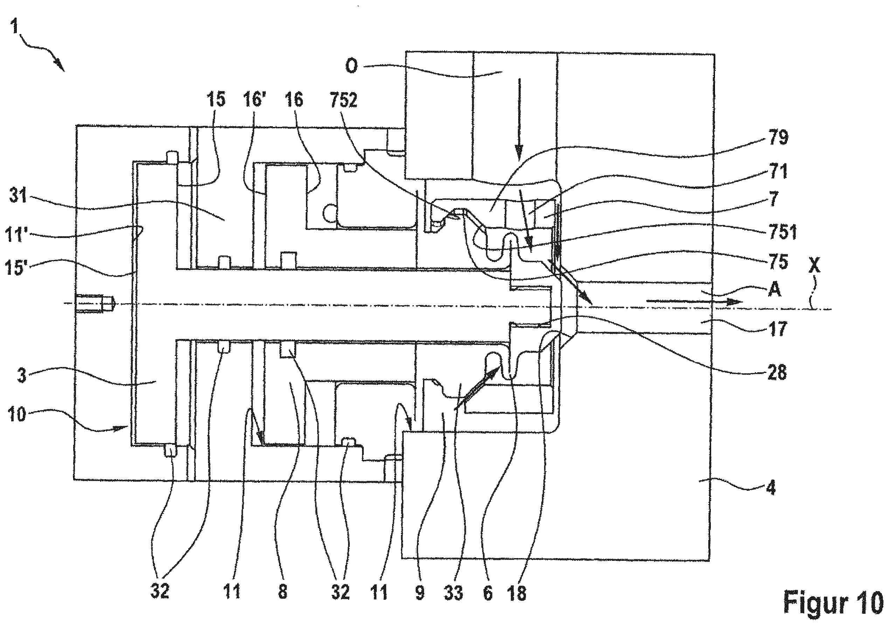

In der Figur 10 das Sterilisieren (dritter Betriebszustand) gezeigt. In diesem Betriebszustand wird durch eine nach-oben Bewegung des Ventilkolbens 3 das Mitnehmerelement 33 mit einem zweiten Aufsitzpunkt 752, beispielsweise dem Anschlag 74 der Innenausnehmung 75 (siehe erstes Ausführungsbeispiel), der Innenausnehmung 75 derart in Kontakt gebracht, dass der Ventilkolben 3 die gesamte Hülse 7 in Richtung weg vom dem Ventilsitz 28 zieht. Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

## Patentansprüche

1. Hohlkörperherstellungsmaschine (100) umfassend mindestens eine Form (Bf), innerhalb derer Hohlkörper (V, F) mittels Beaufschlagung durch ein unter Druck stehendes Medium herstellbar sind, eine mindestens zwei Ventile (1) aufweisende Ventileinheit (5), wobei ein Eingang eines zweiten Ventils (51) mit einem zweiten, unter einem zweiten Druck stehenden Druckspeicher (S) verbunden ist und ein Ausgang des zweiten Ventils (51) über einen Kanal mit einer Blasdüse (30) verbunden ist, wobei der Eingang (O) eines ersten Ventils (1) mit einem ersten, unter einem ersten Druck stehenden Druckspeicher (S) verbunden ist und der Ausgang (A) des ersten Ventils (1) über einen Kanal (17) ebenfalls mit der Blasdüse (30) verbunden ist, wobei die Blasdüse (30) während zumindest eines Teils des Formungsvorgangs das zu formende Material (V) und/oder die Form (Bf) gegenüber der Umgebung abdichtet, wobei das erste Ventil (1) ein Ventilgehäuse (11) aufweist und innerhalb des Gehäuses (11) zwischen dem Eingang (O) und dem Ausgang (A) ein Hohlraum (9) ausgebildet ist, innerhalb dessen das Medium während des Formungsvorgangs durchleitbar ist und innerhalb dessen zumindest ein Teil eines Schaltelement (10) angeordnet ist, mit welchem ein Öffnen und ein Schließen des ersten Ventils (1) durchführbar ist, **dadurch gekennzeichnet, dass** zwischen dem Eingang (O) und dem Ausgang (A) des ersten Ventils (1) mindestens zwei durch Material des Gehäuses (11) und/oder des Schaltelements (10) voneinander getrennte Strömungswege (SW1, SW2) für das Medium bereitstellbar sind.

2. Hohlkörperherstellungsmaschine (100) nach Anspruch 1, **dadurch gekennzeichnet, dass**
a) in einem ersten Betriebszustand des ersten Ventils (1) lediglich ein erster der beiden Strömungswege (SW1) für das Medium bereitgestellt wird, und/oder
b) in einem zweiten Betriebszustand des ersten Ventils (1) lediglich ein zweiter der beiden Strömungswege (SW2) für das Medium bereitgestellt wird, und/oder
c) in einem dritten Betriebszustand des ersten Ventils (1) beide Strömungswege (SW1, SW2) gleichzeitig für das Medium bereitgestellt werden.

3. Hohlkörperherstellungsmaschine(100) nach einem der vorgehenden Ansprüche, **dadurch gekennzeichnet, dass** die beiden Strömungswege (SW1, SW2) unterschiedliche Strömungsquerschnitte aufweisen, mit denen in mindestens zwei Betriebszuständen unterschiedliche Volumenströme des Mediums realisierbar sind, insbesondere wobei im ersten Betriebszustand ein Vorblasen durchführbar ist, bei welchem der Hohlkörper (V) mittels Zuführung des Mediums lediglich teilweise expandiert wird und dass beim zweiten Betriebszustand ein Recyceln durchführbar ist, bei welchem ein Teil des Mediums aus dem vorzugsweise fertig expandiertem Hohlkörper (F) über das erste Ventil (1) zurück in den Druckspeicher (S) führbar ist und dass im dritten Betriebszustand eine Sterilisation der Strömungswege (SW1, SW2) durchführbar ist, bei welchem durch ein Sterilisationsmedium beide Strömungswege (SW1, SW2) gleichzeitig sterilisierbar sind.

4. Hohlkörperherstellungsmaschine (100) nach einem der vorgehenden Ansprüche, **dadurch gekennzeichnet, dass** die Hohlkörperherstellungsmaschine (100) einen Reinraum mit einer kontaminationsarmen Atmosphäre aufweist, innerhalb derer die Hohlkörper (F) herstellbar sind und der Hohlraum (9) des ersten Ventils (1) im offenen Zustand des Ventils (1) mit dem Reinraum verbunden ist und dass das Schaltelement (10) einen Faltenbalg (6) aufweist, über welchen ein Antrieb (15, 15') des Schaltelements gegenüber dem Hohlraum (9), insbesondere luftdicht, abgedichtet ist.

5. Hohlkörperherstellungsmaschine (100) nach einem der vorgehenden Ansprüche, **dadurch gekennzeichnet, dass** das Schaltelement (10) einen Ventilkolben (3) und eine gegenüber dem Ventilkolben (3) bewegliche Hülse (7) aufweist, welche zumindest bereichsweise zwischen einem Ventilsitz (18) am Ausgang (A) des Ventils (1) und dem Ventilkolben (3) angeordnet ist, insbesondere wobei zwischen der Hülse (7) und dem Ventilkolben (3) der erste Strömungsweg (SW1) und der zweite Strömungsweg (SW2) zwischen dem Gehäuse (9) und der Hülse (7) verläuft.

6. Hohlkörperherstellungsmaschine (100) nach Anspruch 5, **dadurch gekennzeichnet, dass** die Hülse über eine Feder (72) gegenüber dem Ventilkolben (3) vorgespannt ist, insbesondere wobei die Feder (72) die Hülse (7) mit einer Kraft weg vom Ventilkolben (3) in Richtung Ventilausgang (A) vorspannt, wobei die Kraft der Feder (72) kleiner ist als eine Kraft des Mediums auf die Hülse (7) in Richtung des Ventilkolbens (3) bei einem Zurückfließen des Mediums vom Hohlkörper (F) in den ersten Druckspeicher (S).

7. Hohlkörperherstellungsmaschine (100) nach einem der Ansprüche 5 bis 6, **dadurch gekennzeichnet, dass** das erste Ventil (1) einen zweiten Kolben (8) aufweist, über welchen ein Anschlag (81) für die Hülse (7) oder den Ventilkolben (3) verstellbar ist, wobei der Anschlag (81) im ersten und zweiten Betriebszustand in Richtung auf den Ausgang (A) zugestellt ist und bewirkt, dass lediglich einer der beiden Strömungswege (SW1, SW2) nutzbar ist, und wobei der Anschlag (81) im dritten Betriebszustand, in welchem Sterilisationsgas durch beide Strömungswege (SW1, SW2) geleitet wird, vom Ausgang (A) weggefahren ist, so dass beide Strömungswege (SW1, SW2) freigegeben sind.

8. Hohlkörperherstellungsmaschine (100) nach zumindest einem der vorhergehenden Ansprüche, **dadurch gekennzeichnet, dass** in einem vierten Betriebszustand jeder der Strömungswege (SW1, SW2, SW3) durch eine fluiddichte Abdichtung des Kanals (17) durch den Ventilkolben (3) unterbrochen ist, wobei in diesem Betriebszustand eine Wand des Kanals (17) in unmittelbarem Kontakt mit dem Ventilkolbens (3) steht und durch diesen unmittelbaren Kontakt die fluiddichte Abdichtung erreicht wird, insbesondere wobei eine Außenfläche des Ventilkolbens (3) in dem Bereich, welcher in einer Richtung quer zu einer Verschieberichtung (X) des Ventilkolbens (3) seitlich von einem beweglichen Element (7), insbesondere der beweglichen Hülse (7), umgeben ist, zumindest ein Mitnehmerelement (33), insbesondere in Form eines Vorsprungs, ausbildet, welches in einer entsprechenden Innenausnehmung (75) des beweglichen Elements (7) verschiebebeweglich angeordnet ist.

9. Hohlkörperherstellungsmaschine (100) nach dem vorhergehenden Anspruch, **dadurch gekennzeichnet, dass** das bewegliche Element (7) und der Ventilkolben (3) vorspannungsfrei mechanisch miteinander gekoppelt sind, insbesondere wobei das bewegliche Element (7) und der Ventilkolben (3) nur über das Mitnehmerelement (33) in mechanischem Eingriff miteinander stehen.

10. Hohlkörperherstellungsmaschine (100) nach zumindest einem der Ansprüche 1 bis 9, **dadurch gekennzeichnet, dass** in dem vierten Betriebszustand das Mitnehmerelement (33) an einem dem Ventilsitz (18) zugewandten ersten Aufsitzpunkt (751) des Innenausnehmung (75) auf einer Innenwandung der Hülse (7) aufsitzt, insbesondere wobei im zweiten und/oder dritten Betriebszustand die Hülse (7) von dem Ventilsitz (18) durch einen Eingriff des Mitnehmerelements (33) in einen dem Ventilsitz (18) abgewandten Aufsitzpunktes (752) der Innenausnehmung (75) von dem Ventilsitz (18) abgehoben wird.

11. Hohlkörperherstellungsmaschine (100) nach zumindest einem der Ansprüche 1 bis 10, **dadurch gekennzeichnet, dass** die Hülse (7) in einer Seitenwand (79) zumindest eine Drosselbohrung (71) aufweist, und wobei in den Betriebszuständen, eins, zwei und drei, deren jeweils zugeordnete Strömungswege (SW1, SW2, SW3) durch diese Drosselbohrung (71) hindurch verlaufen.

12. Verfahren zum Herstellen von Hohlkörpern (V, F) in einer Form (10) mittels Beaufschlagung durch ein unter Druck stehendes Medium, wobei das Medium über eine mindestens zwei Ventile (1, 51) aufweisende Ventileinheit (5) zu dem Hohlkörper (V,F) geleitet wird, wobei ein Eingang eines zweiten Ventils (51) mit einem zweiten, unter einem zweiten Druck stehenden Druckspeicher (S) verbunden ist und ein Ausgang des zweiten Ventils (51) über einen Kanal mit einer Blasdüse (30) verbunden ist, wobei der Eingang (O) eines ersten Ventils (1) mit einem ersten, unter einem ersten Druck stehenden Druckspeicher (S) verbunden ist und der Ausgang (A) des ersten Ventils (1) über einen Kanal(17) ebenfalls mit der Blasdüse (30) verbunden ist, wobei die Blasdüse (30) während eines Teils des Formungsvorgangs das zu formende Material (V) und/oder die Form (10) gegenüber der Umgebung abdichtet, wobei das erste Ventil (1) ein Ventilgehäuse (11) aufweist und innerhalb des Gehäuses (11) zwischen dem Eingang (O) und dem Ausgang (A) ein Hohlraum (9) ausgebildet ist, innerhalb dessen das Medium während des Formungsvorgangs durchgeleitet wird und innerhalb dessen zumindest ein Teil eines Schaltelement (10) angeordnet ist, mit welchem ein Öffnen und ein Schließen des ersten Ventils (1) durchgeführt wird, **dadurch gekennzeichnet, dass** das Medium zwischen dem Eingang (O) und dem Ausgang (A) des ersten Ventils (1) mindestens zwei durch Material des Gehäuses (11) und/oder des Schaltelements (10) voneinander getrennte Strömungswege (SW1, SW2) durchfliest.

13. Verfahren nach Anspruch 12, **dadurch gekennzeichnet, dass** das Schaltelement (10) abhängig von einem Betriebszustand des Ventils (1), und insbesondere abhängig von der Strömungsrichtung des Mediums durch den Hohlraum (9), entweder den ersten (SW1), den zweiten (SW2) oder beide Strömungswege (SW1, SW2) freigibt, insbesondere wobei das Medium in einem Produktionsmodus während eines Vorblasens des Hohlkörpers (V,F) im Wesentlichen nur über den ersten Strömungsweg (SW1) fliest, und während eines Sterilisationsmodus Sterilisationsmedium über beide Strömungswege (SW1, SW2) fliest.

14. Verfahren nach einem der Ansprüche 12 bis 13, **dadurch gekennzeichnet, dass** während eines Recyclings von Medium in einem Produktionsmodus das Medium im Wesentlichen nur über den zweiten Strömungsweg zurück in einen Druckspeicher fliest.

## Claims

1. Hollow part manufacturing machine (100) comprising at least one mould (Bf) in which hollow parts (V, F) can be manufactured by means of the application of a pressurised medium, a valve unit (5), which has at least two valves (1), wherein an inlet of a second valve (51) is connected to a second pressure accumulator (S), which is pressurised under a second pressure, and an outlet of the second valve (51) is connected to a blow nozzle (30) via a channel, wherein the inlet (O) of a first valve (1) is connected to a first pressure accumulator (S), which is pressurised under a first pressure, and the outlet (A) of the first valve (1) is also connected to the blow nozzle (30) via a channel (17), wherein, during at least part of the moulding process, the blow nozzle (30) seals the material to be moulded (V), and/or the mould (Bf), relative to the environment, wherein the first valve (1) has a valve housing (11), and in the housing (11) a cavity (9) is formed between the inlet (O) and the outlet (A), within which the medium can be supplied during the moulding process and within which at least a part of a switching element (10) is arranged, with which an opening and closing of the first valve (1) can be carried out, **characterised in that** at least two flow paths (SW1, SW2), which are separated from each other by material of the housing (11) and/or of the switching element (10), can be provided for the medium, between the inlet (O) and the outlet (A) of the first valve (1).

2. Hollow part manufacturing machine (100) according to claim 1, **characterised in that**,
a) in a first operating condition of the first valve (1), only a first of the two flow paths (SW1) is provided for the medium, and/or
b) in a second operating condition of the first valve (1), only a second of the two flow paths (SW2) is provided for the medium, and/or
c) in a third operating condition of the first valve (1), both flow paths (SW1, SW2) are provided for the medium at once.

3. Hollow part manufacturing machine (100) according to one of the previous claims, **characterised in that** both the flow paths (SW1, SW2) have different flow cross-sections with which, in at least two operating conditions, different volume flows of the medium can be realised, in particular wherein in the first operating condition, a pre-blowing can be carried out, during which the hollow part (V) can only be expanded in part by feeding the medium, and that, during the second operating condition, a recycling can be carried out, during which a part of the medium can be guided from the preferably finally, expanded hollow part (F) back into the pressure accumulator (S) via the first valve (1), and that, in the third operating condition, a sterilisation of the flow paths (SW1, SW2) can be carried out, during which both the flow paths (SW1, SW2) can be sterilised by a sterilisation medium simultaneously.

4. Hollow part manufacturing machine (100) according to one of the previous claims, **characterised in that** the hollow part manufacturing machine (100) has a clean space with an atmosphere preventing contamination, in which the hollow parts (F) can be manufactured and the cavity (9) of the first valve (1) is connected to the clean space in the open condition of the valve (1), and that the switching element (10) has bellows (6), via which a drive (15, 15') of the switching element is sealed, particularly sealed airtight, relative to the cavity (9).

5. Hollow part manufacturing machine (100) according to one of the previous claims, **characterised in that** the switching element (10) has a valve piston (3) and a movable sleeve (7) relative to the valve piston (3), which, at least in some areas, is arranged between a valve seat (18) at the outlet (A) of the valve (1) and the valve piston (3), in particular wherein the first flow path (SW1) runs between the sleeve (7) and the valve piston (3), and the second flow path (SW2) runs between the housing (9) and the sleeve (7).

6. Hollow part manufacturing machine (100) according to claim 5, **characterised in that** the sleeve is pretensioned relative to the valve piston (3) via a spring (72), in particular wherein the spring (72) pretensions the sleeve (7) away from the valve piston (3) in the direction of the valve outlet (A), using a force, wherein, during a flowing back of the medium from the hollow part (F) into the first pressure accumulator (S), the force of the spring (72) is less than a force of the medium onto the sleeve (7) in the direction of the valve piston (3).

7. Hollow part manufacturing machine (100) according to one of claims 5 to 6, **characterised in that** the first valve (1) has a second piston (8), via which a stop (81) for the sleeve (7) or the valve piston (3) can be shifted, wherein, in the first and second operating conditions, the stop (81) is blocked in the direction of the outlet (A), meaning that only one of the two flow paths (SW1, SW2) can be used, and wherein, in the third operating condition, in which sterilisation gas is supplied through both flow paths (SW1, SW2), the stop (81) is moved away from the outlet (A), so that both flow paths (SW1, SW2) are freed.

8. Hollow part manufacturing machine (100) according to at least one of the previous claims, **characterised in that**, in a fourth operating condition, each of the flow paths (SW1, SW2, SW3) is interrupted by an impermeable sealing of the channel (17) by the valve piston (3), wherein, in this operating condition, a wall of the channel (17) is in direct contact with the valve piston (3) and the impermeable sealing is achieved due to this direct contact, particularly wherein in the area, which is surrounded in a direction transverse to a shifting direction (X) of the valve piston (3) to the side of a movable element (7), particularly the movable sleeve (7), an outer surface of the valve piston (3) forms at least one driving element (33), particularly in the form of a projection, which is arranged in a shifting and moving manner in a corresponding inner recess (75) of the movable element (7).

9. Hollow part manufacturing machine (100) according to the previous claim, **characterised in that** the movable element (7) and the valve piston (3) are coupled to each other mechanically, without pre-tensioning, particularly wherein the movable element (7) and the valve piston (3) are only mechanically engaged via the driving element (33).

10. Hollow part manufacturing machine (100) according to at least one of claims 1 to 9, **characterised in that**, in the fourth operating condition, the driving element (33) sits on a first seating point (751) facing the valve seat (18) of the inner recess (75) on an inner wall of the sleeve (7), particularly wherein in the second and/or third operating conditions, the sleeve (7) of the valve seat (18) is lifted off the valve seat (18) into a seating point (752) facing away from the valve seat (18) of the inner recess (75), by an engagement of the driving element (33).

11. Hollow part manufacturing machine (100) according to at least one of claims 1 to 10, **characterised in that** the sleeve (7) in a side wall (79) has at least one restrictor bore (71), and wherein, in operating conditions one, two, and three, each of the assigned flow paths (SW1, SW2, SW3) thereof run through this restrictor bore (71).

12. Method for manufacturing hollow parts (V, F) in a mould (10) by means of the application of a pressurised medium, wherein the medium is supplied via a valve unit (5), which has at least two valves (1, 51), to the hollow part (V, F), wherein an inlet of a second valve (51) is connected to a second pressure accumulator (S), which is pressurised under a second pressure, and an outlet of the second valve (51) is connected to a blow nozzle (30) via a channel, wherein the inlet (O) of a first valve (1) is connected to a first pressure accumulator (S), which is pressurised under a first pressure, and the outlet (A) of the first valve (1) is also connected to the blow nozzle (30) via a channel (17), wherein, during part of the moulding process, the blow nozzle (30) seals the material to be moulded (V), and/or the mould (10), relative to the environment, wherein the first valve (1) has a valve housing (11), and in the housing (11) a cavity (11) is formed between the inlet (O) and the outlet (A), in which, during the moulding process, the medium is supplied and in which at least a part of a switching element (10) is arranged, with which an opening and a closing of the first valve (1) can be carried out, **characterised in that** the medium flows between the inlet (O) and the outlet (A) of the first valve (1) through at least two flow paths (SW1, SW2), which are separated from each other by material of the housing (11) and/or of the switching element (10).

13. Method according to claim 12, **characterised in that** the switching element (10) frees either the first flow path (SW1), the second (SW2) or both flow paths (SW1, SW2), depending on an operating condition of the valve (1), and in particular depending on the direction of flow of the medium through the cavity (9) particularly wherein in a production mode, during a pre-blowing of the hollow part (V,F), the medium only flows substantially via the first flow path (SW1), and, during a sterilisation mode, sterilisation medium flows via both flow paths (SW1, SW2).

14. Method according to one of claims 12 to 13, **characterised in that**, in a production mode, during a recycling of medium, the medium only flows substantially back into a pressure accumulator via the second flow path.

## Revendications

1. Machine de fabrication de corps creux (100) comprenant au moins un moule (Bf), à l'intérieur duquel des corps creux (V, F) peuvent être fabriqués au moyen d'une sollicitation par un milieu sous pression, une unité de soupape (5) présentant au moins deux soupapes (1), dans laquelle une entrée d'une deuxième soupape (51) est reliée à un deuxième accumulateur de pression (S) sous une deuxième pression et une sortie de la deuxième soupape (51) est reliée à une buse de soufflage (30) par le biais d'un canal, dans laquelle l'entrée (O) d'une première soupape (1) est reliée à un premier accumulateur de pression (S) sous une première pression et la sortie (A) de la première soupape (1) est également reliée à la buse de soufflage (30) par le biais d'un canal (17), dans laquelle la buse de soufflage (30) rend étanche le matériau à mouler (V) et/ou le moule (Bf) par rapport à l'environnement pendant au moins une partie de l'opération de moulage, dans laquelle la première soupape (1) présente un boîtier de soupape (11) et une cavité (9) est réalisée à l'intérieur du boîtier (11) entre l'entrée (O) et la sortie (A), à l'intérieur de laquelle le milieu peut être guidé pendant l'opération de moulage et à l'intérieur de laquelle au moins une partie d'un élément de commutation (10) est agencée, avec lequel une ouverture et une fermeture de la première soupape (1) peut être effectuée, **caractérisée en ce qu'**au moins deux chemins d'écoulement (SW1, SW2) séparés l'un de l'autre par un matériau du boîtier (11) et/ou de l'élément de commutation (10) peuvent être mis à disposition pour le milieu entre l'entrée (O) et la sortie (A) de la première soupape (1).

2. Machine de fabrication de corps creux (100) selon la revendication 1, **caractérisée en ce que**
a) dans un premier état de fonctionnement de la première soupape (1), seul un premier des deux chemins d'écoulement (SW1) est mis à disposition pour le milieu, et/ou
b) dans un deuxième état de fonctionnement de la première soupape (1), seul un deuxième des deux chemins d'écoulement (SW2) est mis à disposition pour le milieu, et/ou
c) dans un troisième état de fonctionnement de la première soupape (1), les deux chemins d'écoulement (SW1, SW2) sont mis à disposition en même temps pour le milieu.

3. Machine de fabrication de corps creux (100) selon l'une quelconque des revendications précédentes, **caractérisée en ce que** les deux chemins d'écoulement (SW1, SW2) présentent différentes sections transversales d'écoulement, avec lesquelles différents débits du milieu sont réalisables dans au moins deux états de fonctionnement, en particulier dans laquelle dans le premier état de fonctionnement, un présoufflage peut être effectué, dans lequel le corps creux (V) est expansé seulement en partie par alimentation du milieu et que dans le deuxième état de fonctionnement, un recyclage peut être effectué, dans lequel une partie du milieu du corps creux (F) de préférence entièrement expansé peut être ramenée dans l'accumulateur de pression (S) par le biais de la première soupape (1) et que dans le troisième état de fonctionnement, une stérilisation des chemins d'écoulement (SW1, SW2) peut être effectuée, dans laquelle les deux chemins d'écoulement (SW1, SW2) peuvent être stérilisés en même temps par un milieu de stérilisation.

4. Machine de fabrication de corps creux (100) selon l'une quelconque des revendications précédentes, **caractérisée en ce que** la machine de fabrication de corps creux (100) présente une chambre propre avec une atmosphère peu contaminée, à l'intérieur de laquelle les corps creux (F) peuvent être fabriqués et la cavité (9) de la première soupape (1) est reliée à l'état ouvert de la soupape (1) à la chambre propre et que l'élément de commutation (10) présente un soufflet (6), par le biais duquel un entraînement (15, 15') de l'élément de commutation est rendu étanche, en particulier étanche à l'air, par rapport à la cavité (9).

5. Machine de fabrication de corps creux (100) selon l'une quelconque des revendications précédentes, **caractérisée en ce que** l'élément de commutation (10) présente un piston de soupape (3) et une douille (7) mobile par rapport au piston de soupape (3), laquelle est agencée au moins par zone entre un siège de soupape (18) à la sortie (A) de la soupape (1) et le piston de soupape (3), en particulier dans laquelle le premier chemin d'écoulement (SW1) s'étend entre la douille (7) et le piston de soupape (3) et le deuxième chemin d'écoulement (SW2) s'étend entre le boîtier (9) et la douille (7).

6. Machine de fabrication de corps creux (100) selon la revendication 5, **caractérisée en ce que** la douille est précontrainte par rapport au piston de soupape (3) par le biais d'un ressort (72), en particulier dans laquelle le ressort (72) précontraint la douille (7) avec une force s'éloignant du piston de soupape (3) en direction de la sortie de soupape (A), dans laquelle la force du ressort (72) est inférieure à une force du milieu sur la douille (7) en direction du piston de soupape (3) lors d'un reflux du milieu du corps creux (F) au premier accumulateur de pression (S).

7. Machine de fabrication de corps creux (100) selon l'une quelconque des revendications 5 à 6, **caractérisée en ce que** la première soupape (1) présente un deuxième piston (8), par le biais duquel une butée (81) pour la douille (7) ou le piston de soupape (3) est réglable, dans laquelle la butée (81) est amenée dans le premier et deuxième état de fonctionnement en direction de la sortie (A) et provoque le fait que seulement un des deux chemins d'écoulement (SW1, SW2) est utilisable, et dans laquelle la butée (81) dans le troisième état de fonctionnement, dans lequel un gaz de stérilisation est conduit à travers les deux chemins d'écoulement (SW1, SW2), est éloignée de la sortie (A), si bien que les deux chemins d'écoulement (SW1, SW2) sont libérés.

8. Machine de fabrication de corps creux (100) selon au moins l'une quelconque des revendications précédentes, **caractérisée en ce que** dans un quatrième état de fonctionnement, chacun des chemins d'écoulement (SW1, SW2, SW3) est interrompu par une étanchéification étanche aux fluides du canal (17) par le piston de soupape (3), dans laquelle dans cet état de fonctionnement, une paroi du canal (17) est en contact direct avec le piston de soupape (3) et par ce contact direct, l'étanchéification étanche aux fluides est obtenue, en particulier dans laquelle une surface extérieure du piston de soupape (3) forme dans la zone, qui est entourée dans une direction transversale à une direction de déplacement (X) du piston de soupape (3) latéralement d'un élément mobile (7), en particulier de la douille mobile (7), au moins un élément d'entraînement (33), en particulier sous la forme d'une saillie, qui est agencé mobile en translation dans un évidement intérieur (75) correspondant de l'élément mobile (7).

9. Machine de fabrication de corps creux (100) selon la revendication précédente, **caractérisée en ce que** l'élément mobile (7) et le piston de soupape (3) sont couplés l'un à l'autre mécaniquement sans précontrainte, en particulier dans laquelle l'élément mobile (7) et le piston de soupape (3) sont en prise mécanique l'un avec l'autre seulement par le biais de l'élément d'entraînement (33).

10. Machine de fabrication de corps creux (100) selon au moins l'une quelconque des revendications 1 à 9, **caractérisée en ce que** dans le quatrième état de fonctionnement, l'élément d'entraînement (33) s'appuie au niveau d'un premier point d'appui (751) de l'évidement intérieur (75) tourné vers le siège de soupape (18) sur une paroi intérieure de la douille (7), en particulier dans laquelle dans le deuxième et/ou troisième état de fonctionnement, la douille (7) est soulevée du siège de soupape (18) par une prise de l'élément d'entraînement (33) dans un point d'appui (752) de l'évidement intérieur (75) opposé au siège de soupape (18) du siège de soupape (18).

11. Machine de fabrication de corps creux (100) selon au moins l'une quelconque des revendications 1 à 10, **caractérisée en ce que** la douille (7) présente dans une paroi latérale (79) au moins un perçage d'étranglement (71), et dans laquelle dans les états de fonctionnement, un, deux et trois, leurs chemins d'écoulement (SW1, SW2, SW3) respectivement associés s'étendent à travers ce perçage d'étranglement (71).

12. Procédé de fabrication de corps creux (V, F) dans un moule (10) au moyen d'une sollicitation par un milieu sous pression, dans lequel le milieu est conduit au corps creux (V, F) par le biais d'une unité de soupape (5) présentant au moins deux soupapes (1, 51), dans lequel une entrée d'une deuxième soupape (51) est reliée à un deuxième accumulateur de pression (S) sous une deuxième pression et une sortie de la deuxième soupape (51) est reliée à une buse de soufflage (30) par le biais d'un canal, dans lequel l'entrée (O) d'une première soupape (1) est reliée à un premier accumulateur de pression (S) sous une première pression et la sortie (A) de la première soupape (1) est également reliée à la buse de soufflage (30) par le biais d'un canal (17), dans lequel la buse de soufflage (30) rend étanche le matériau à mouler (V) et/ou le moule (10) par rapport à l'environnement pendant une partie de l'opération de moulage, dans lequel la première soupape (1) présente un boîtier de soupape (11) et une cavité (9) est réalisée à l'intérieur du boîtier (11) entre l'entrée (O) et la sortie (A), à l'intérieur de laquelle le milieu est guidé à travers pendant l'opération de moulage et à l'intérieur de laquelle au moins une partie d'un élément de commutation (10) est agencée, avec lequel une ouverture et une fermeture de la première soupape (1) est effectuée, **caractérisé en ce que** le milieu entre l'entrée (O) et la sortie (A) de la première soupape (1) coule à travers au moins deux chemins d'écoulement (SW1, SW2) séparés l'un de l'autre par un matériau du boîtier (11) et/ou de l'élément de commutation (10).

13. Procédé selon la revendication 12, **caractérisé en ce que** l'élément de commutation (10) libère en fonction d'un état de fonctionnement de la soupape (1), et en particulier en fonction de la direction d'écoulement du milieu à travers la cavité (9), soit le premier (SW1), soit le deuxième (SW2) soit les deux chemins d'écoulement (SW1, SW2), en particulier dans lequel le milieu s'écoule dans un mode de production pendant un présoufflage du corps creux (V, F) sensiblement seulement par le biais du premier chemin d'écoulement (SW1), et pendant un mode de stérilisation, un milieu de stérilisation s'écoule par le biais des deux chemins d'écoulement (SW1, SW2).

14. Procédé selon l'une quelconque des revendications 12 à 13, **caractérisé en ce que** pendant un recyclage de milieu dans un mode de production, le milieu reflue dans un accumulateur de pression sensiblement seulement par le biais du deuxième chemin d'écoulement.
